# EUROPEAN PATENT APPLICATION

(11) **EP 4 544 892 A1**
(43) Date of publication of application: **30.04.2025**
(21) Application number: 23831321.7
(22) Date of filing: 23.06.2023
(51) Int. Cl.: A01B 69/00, A01B 59/06, A01C 11/02

(54) **AGRICULTURAL MACHINE, AGRICULTURAL WORK ASSISTANCE SYSTEM, AGRICULTURAL WORK ASSISTANCE METHOD**

(30) Priority: 27.06.2022 JP 2022102824
(71) Applicant: KUBOTA CORPORATION, Osaka-shi, Osaka 556-8601 (JP)
(72) Inventor: SUZUKAWA Megumi, Sakai-shi, Osaka 590-0908 (JP)
(74) Representative: Cabinet Beau de Loménie
(86) International application number: PCT/JP2023/023406
(87) International publication number: WO 2024/004879

(57) **Abstract**

An agricultural machine is enabled to perform irregular ground work with more convenience.

An agricultural machine (1) includes a traveling machine body (21) equipped with a working implement (10) including a plurality of ground working mechanisms (42) to perform ground work; and a controller (3) to acquire work information indicating whether or not the ground work is to be performed in each of a plurality of areas (A) of an agricultural field (H). The controller (3) is configured or programmed to selectively activate each of the plurality of ground working mechanisms (42) based on the work information when the traveling machine body (21) travels in the agricultural field (H) and when the working implement (10) passes through an area (A) of the plurality of areas (A).

## Description

### Technical Field

The present invention relates to an agricultural machine that performs ground work with a working implement equipped on a traveling machine body while causing the traveling machine body to travel in an agricultural field, and to an agricultural work assistance system and an agricultural work assistance method that assist agricultural work performed by the agricultural machine.

### Background Art

As an agricultural machine that performs ground work in an agricultural field, PTL 1, for example, discloses an agricultural machine that performs ground work in an agricultural field. The agricultural machine disclosed in PTL 1 is a rice transplanter and includes a traveling machine body that travels in the agricultural field, a working implement installed on a rear portion of the traveling machine body to perform the ground work, a route setter, and a controller that controls them. The working implement is a seedling planter and includes plural (four) seedling-planting mechanisms to plant seedlings of paddy rice in the agricultural field. The controller causes planting arms provided in the seedling-planting mechanisms to plant the seedlings in the agricultural field while causing the traveling machine body to travel along a target traveling route set in the agricultural field (paddy field) by the route setter. Additionally, when the traveling machine body travels along a levee edge of the agricultural field, the controller sets row clutches that pass through a worked region of the agricultural field to a disengaged state to stop the seedling-planting mechanisms that pass through the worked region, and causes the planting arms of the seedling-planting mechanisms that pass through an unworked region of the agricultural field to plant the seedlings.

### Citation List

### Patent Literature

PTL 1: Japanese Patent No. 7026585

### Summary of Invention

### Technical Problem

An agricultural machine, such as a rice transplanter, including plural ground working mechanisms (seedling-planting mechanisms) generally operates all of the ground working mechanisms to perform ground work in an agricultural field except in a region along a levee edge of the agricultural field. However, there may be cases in which regions that have undergone the ground work and regions that have not undergone the ground work are to be formed in a central region of the agricultural field for various purposes. Agricultural machines and working implements according to the related art are not designed for such irregular ground work, and have been inconvenient.

In light of the above-described problem, an object of the present invention is to enable an agricultural machine to perform irregular ground work with more convenience.

### Solution to Problem

To solve the above-described technical problem, technical means of the present invention includes the following features.

An agricultural machine according to an example embodiment of the present invention includes a traveling machine body and a controller. The traveling machine body is equipped with a working implement including a plurality of ground working mechanisms to perform ground work. The controller is configured or programmed to acquire work information indicating, with regard to each of areas of an agricultural field, whether or not the ground work is to be performed in a corresponding one of the areas, and, when the traveling machine body travels in the agricultural field and the working implement passes through one of the areas, selectively actuate each of the ground working mechanisms based on the work information.

The controller may be configured or programmed to acquire the work information, with regard to each of the areas, indicating whether each of the ground working mechanisms is to perform the ground work in a corresponding one of the areas, and, when the working implement passes through one of the areas, if the work information indicates that at least one of the ground working mechanisms is not to perform the ground work in the one of the areas, not actuate the at least one of the ground working mechanisms that is indicated not to perform the ground work in the one of the areas but actuate one or more of the ground working mechanisms that are indicated to perform the ground work in the one of the areas.

The controller may be configured or programmed to, based on the work information, select, for each of the areas, one or more of the ground working mechanisms that are to perform the ground work in a corresponding one of the areas, and, when the working implement passes through one of the areas, actuate the one or more of the ground working mechanisms selected to perform the ground work in the one of the areas.

The agricultural machine may include an accommodator to accommodate materials that are seeds or seedlings of crops. The working implement may include, as the plurality of ground working mechanisms, a plurality of crop-planting mechanisms arranged in a width direction of the traveling machine body at a predetermined interval to crop the agricultural field with the materials accommodated in the accommodator. The controller may be configured or programmed to determine, for each of the areas, whether or not each of the crop-planting mechanisms is to plant the materials in a corresponding one of the areas.

The agricultural machine may include clutches each of which is operably switched between an engaged state and a disengaged state and corresponds to each of the crop-planting mechanisms. Each of the crop-planting mechanisms may include a planting arm driven by power of a prime mover provided in or on the traveling machine body. The planting arms may be each configured to, when a corresponding one of the clutches is in the engaged state, take out seedlings from the accommodator and plant the seedlings in the agricultural field, and, when the corresponding clutch is in the disengaged state, not take out seedlings from the accommodator or not plant the seedlings in the agricultural field. The controller may be configured or programmed to, when one of the crop-planting mechanisms is to be actuated, switch a corresponding one of the clutches to the engaged state, and, when one of the crop-planting mechanisms is not to be actuated, switch a corresponding one of the clutches to the disengaged state.

The agricultural machine may include a position detector to detect a position of the traveling machine body based on a satellite signal received from a satellite positioning system. The controller may be configured or programmed to determine, based on the position of the traveling machine body detected by the position detector, which area of the areas is reached by the traveling machine body that is traveling, and, by referring to specific information included in the work information that indicates whether or not the ground work is to be performed in the area reached by the traveling machine body, select one or more of the ground working mechanisms that are to perform the ground work in the area reached by the traveling machine body.

The plurality of ground working mechanisms may be arranged in a width direction of the traveling machine body. The controller may be configured or programmed to, based on the work information and a traveling direction of the traveling machine body, select, for each of the areas, one or more of the ground working mechanisms that are to perform the ground work in a corresponding one of the areas.

The controller may be configured or programmed to create, based on the work information and a working width of the working implement, a travel route along which the traveling machine body is to travel with the working implement performing the ground work in the agricultural field, based on the work information and the travel route, select, for each of the areas, one or more of the ground working mechanisms that are to perform the ground work in a corresponding one of the areas, and, during travel of the traveling machine body along the travel route, when the working implement passes through one of the areas, actuate the one or more ground working mechanisms selected to perform the ground work in the one of the areas.

An agricultural work assistance system according to an example embodiment of the present invention includes the agricultural machine, and an assistor to create work information indicating, with regard to each of areas of an agricultural field, whether or not ground work is to be performed in a corresponding one of the areas.

In the agricultural work assistance system, the agricultural machine may include a traveling machine body equipped with a working implement including a plurality of crop-planting mechanisms to crop the agricultural field with materials. The assistor may be configured or programmed to create, for each variety of the materials, the work information indicating, with regard to each of the areas, whether or not the plurality of crop-planting mechanisms are to plant the variety of materials in a corresponding one of the areas.

An agricultural work assistance method according to an example embodiment of the present invention is to perform ground work in an agricultural field by using a working implement that is equipped on a traveling machine body of an agricultural machine and includes a plurality of ground working mechanisms. The agricultural work assistance method comprises a step in which a controller included in the agricultural machine acquires work information indicating, with regard to each of areas of the agricultural field, whether or not the ground work is to be performed in a corresponding one of the areas, and a step in which, when the traveling machine body travels in the agricultural field and the working implement passes through one of the areas, the controller selectively activates each of the ground working mechanisms based on the work information.

### Advantageous Effects of Invention

According to the present invention, the agricultural machine can perform irregular ground work with more convenience.

### Brief Description of Drawings

[FIG. 1] FIG. 1 is a block diagram of an agricultural work assistance system.
[FIG. 2] FIG. 2 is a side view of an agricultural machine (rice transplanter).
[FIG. 3] FIG. 3 illustrates the main part of a seedling planter of the agricultural machine.
[FIG. 4] FIG. 4 illustrates a state of cooperation between clutch-switching mechanisms and clutches of the agricultural machine.
[FIG. 5] FIG. 5 is a flowchart of an example of the operation of the agricultural machine.
[FIG. 6] FIG. 6 illustrates an example of work information.
[FIG. 7] FIG. 7 illustrates an example of a travel route of the agricultural machine.
[FIG. 8] FIG. 8 illustrates an example of the agricultural field that has undergone seedling planting.
[FIG. 9] FIG. 9 is a flowchart of another example of the operation of the agricultural machine.
[FIG. 10] FIG. 10 illustrates an example of an artwork created in the agricultural field by the agricultural machine.
[FIG. 11A] FIG. 11A illustrates an example of first work information for creating the artwork of FIG. 10.
[FIG. 11B] FIG. 11B illustrates an example of second work information for creating the artwork of FIG. 10.
[FIG. 11C] FIG. 11C illustrates an example of third work information for creating the artwork of FIG. 10.
[FIG. 11D] FIG. 11D illustrates an example of fourth work information for creating the artwork of FIG. 10.
[FIG. 12] FIG. 12 illustrates another state of cooperation between the clutch-switching mechanisms and the clutches.
[FIG. 13] FIG. 13 illustrates another example of work information.
[FIG. 14A] FIG. 14A illustrates an example of planting of first seedlings in FIG. 13 and a travel route.
[FIG. 14B] FIG. 14B illustrates an example of planting of second seedlings in FIG. 13 and the travel route.
[FIG. 15] FIG. 15 illustrates another example in which seedlings (materials) are planted in the agricultural field by the agricultural machine.

### Description of Embodiments

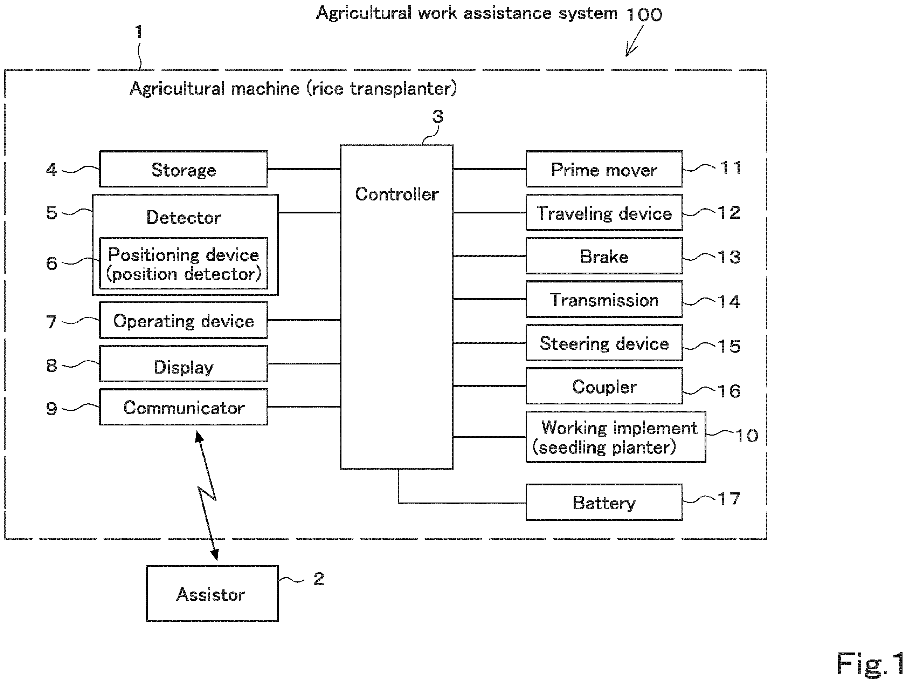

FIG. 1 is a block diagram of an agricultural work assistance system 100 according to an embodiment of the present invention. The agricultural work assistance system 100 includes an agricultural machine 1 and an assistor 2. The agricultural machine 1 is a rice transplanter. The agricultural machine 1 is equipped with a working implement 10. The working implement 10 is a seedling planter that plants seedlings of crops of the Poaceae family in an agricultural field. As described below, the working implement 10 includes plural mechanisms for planting seedlings (materials) in the agricultural field (paddy field).

The agricultural machine of the present invention is not limited to a rice transplanter and may be composed of other agricultural machines, such as a tractor or a spreader machine. Additionally, the working implement of the present invention is not limited to a seedling planter and may be composed of, for example, a transplanter for planting seedlings of crops of the family other than the Poaceae family in the agricultural field, another planter such as a seeder for planting seeds of plants (materials) in the agricultural field, or a spreader.

The agricultural machine 1 includes a controller 3, a storage 4, a detector 5, an operating device 7, a display 8, a communicator 9, a prime mover 11, a traveling device 12, a brake 13, a transmission 14, a steering device 15, a coupler 16, and a battery 17. In addition to these components, the agricultural machine 1 also includes, for example, components included in a typical rice transplanter (not illustrated).

The controller 3 is an electronic control unit (ECU) including a CPU and a memory, and is a control unit that controls the operation of each portion of the agricultural machine 1. The storage 4 includes a volatile memory and a nonvolatile memory. Control data used by the controller 3 to control the operation of each portion of the agricultural machine 1 and the working implement 10 is stored in an internal memory of the controller 3 and the storage 4 in a readable-writable manner. The control data includes specifications of the agricultural machine 1, specifications of the working implement 10, and information for performing ground work (seedling planting) with the working implement 10.

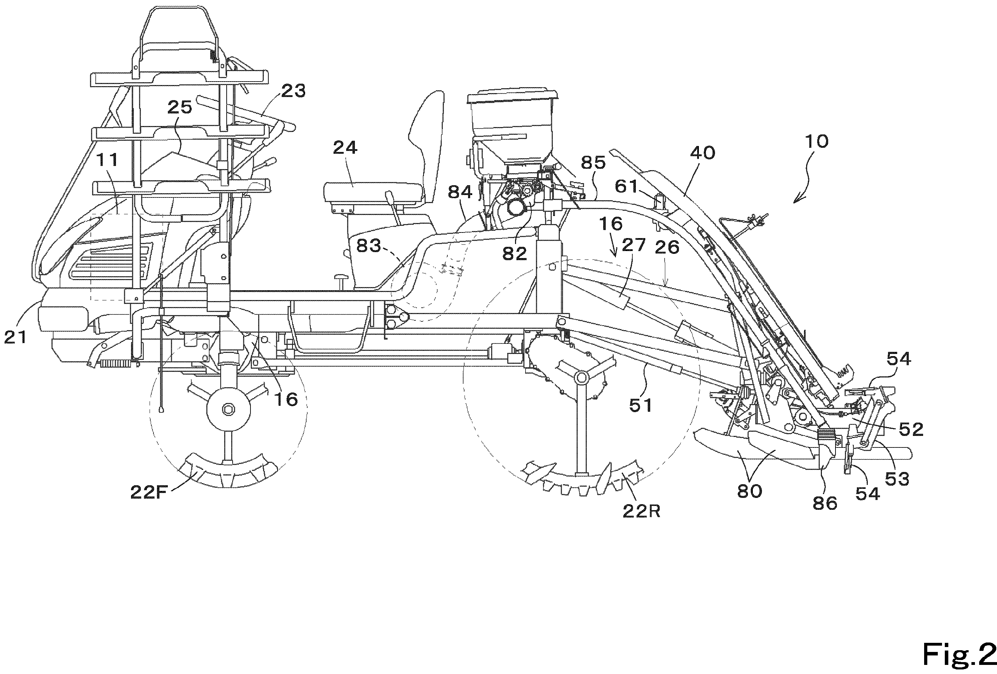

The detector 5 includes a positioning device 6. The positioning device 6, installed in a traveling machine body 21 (FIG. 2) of the agricultural machine 1, receives satellite signals (e.g., positions of positioning satellites, transmission times, and correction information) transmitted from a satellite positioning system (positioning satellites), such as D-GPS, GPS, GLONASS, BeiDou, Galileo, or Michibiki, and detects the current position (e.g., latitude and longitude) based on the satellite signals. In other words, the positioning device 6 constitutes a position detector that detects the position of the traveling machine body 21 of the agricultural machine 1. The controller 3 calculates the position of the working implement 10 from the position of the traveling machine body 21 detected by the positioning device 6 and the position of the working implement 10 relative to the traveling machine body 21.

In addition to the positioning device 6, the detector 5 also includes sensors and/or the like (not illustrated) installed at respective locations in the agricultural machine 1 and the working implement 10. Based on output signals from the sensors and/or the like, the detector 5 detects the operational states (e.g., driving and stopped states and operating positions) of the components of the agricultural machine 1 including the operating device 7, the traveling device 12, the brake 13, the transmission 14, the steering device 15, and the coupler 16. Additionally, based on output signals from the sensors and/or the like, the detector 5 detects the operational state of the working implement 10 and the feeding and charging states of the battery 17.

Furthermore, the detector 5 also includes object sensors including laser sensors, such as LiDAR, ultrasonic wave sensors, cameras, or the like. The object sensors are installed on front, rear, left, and right portions of the traveling machine body 21. The detector 5 detects the presence or absence of an object around the agricultural machine 1 and the working implement 10, a distance to the object, and the like from output signals from the object sensors.

The operating device 7 includes various operation members including switches, keys, handles, levers, pedals, and/or the like for operating each of the agricultural machine 1 and the working implement 10, sensors and electric circuits that output signals corresponding to the operating states of the operation members, and/or the like. The display 8 includes a touch panel and/or the like. The display 8 displays various types of information. Additionally, various types of information can be input by performing a corresponding predetermined operation on a display screen of the display 8. The operating device 7 and the display 8 are input interfaces of the agricultural machine 1.

The communicator 9 includes an antenna and an electric circuit for wirelessly communicating with the assistor 2 via a public communication network, such as the Internet. The assistor 2 is a device that assists the agricultural work of the agricultural machine 1. The assistor 2 is a personal computer, a tablet computer, or a terminal (computer) including a processor, such as a smartphone, provided outside the agricultural machine 1. The controller 3 communicates with the assistor 2 through the communicator 9 to transmit/receive information and data to/from the assistor 2. The communicator 9 is a communication interface and an input interface of the agricultural machine 1.

The prime mover 11 includes an engine. Alternatively, the prime mover 11 may include, for example, an electric motor. The traveling device 12 includes wheels (front wheels 22F and rear wheels 22R in FIG. 2) that support the traveling machine body 21; a traveling mechanism that rotationally drives the wheels; and an electromagnetic control valve, a hydraulic device, and the like that activate the traveling mechanism. The traveling device 12 may also include a fuel injector for driving the prime mover 11 and the like. The brake 13 includes a brake unit; and an electromagnetic control valve, a hydraulic device, and the like that activate the brake unit. The controller 3 causes the traveling device 12 to move the traveling machine body 21, and causes the brake 13 to stop the traveling device 12.

The transmission 14 includes a transmission mechanism that transmits the power of the prime mover 11 to the traveling device 12, the working implement 10, and the like, a mechanism that switches the rotation directions of the wheels, a mechanism for switching between plural gear stages of the traveling machine body 21, and the like. Additionally, the transmission 14 includes electromagnetic control valves, hydraulic devices, and the like that activate the above-described mechanisms. The controller 3 causes the transmission 14 to transmit the power of the prime mover 11 to the traveling device 12, the working implement 10, and the like to operate the traveling device 12, the working implement 10, and the like. Additionally, while the traveling machine body 21 is traveling, the controller 3 causes the transmission 14 to switch between the gear stages, and causes the transmission 14 and the traveling device 12 to change the traveling direction of the traveling machine body 21.

The steering device 15 includes a steering mechanism that steers the traveling machine body 21 (front wheels 22F); and an electromagnetic control valve, a hydraulic device, and the like that activate the steering mechanism. Additionally, the steering device 15 also includes a power steering mechanism that assists the operation of a steering wheel 23 (FIG. 2) with which the steering mechanism is manually activated. While the traveling machine body 21 is traveling, the controller 3 causes the steering device 15 to steer the traveling machine body 21.

The coupler 16 includes a link mechanism 26 (FIG. 2) for coupling the traveling machine body 21 and the working implement 10; and an electromagnetic control valve, a hydraulic device, and the like that swing the link mechanism 26 upward and downward. The traveling machine body 21 and the working implement 10 are coupled by the coupler 16. The controller 3 causes the coupler 16 to raise and lower the working implement 10. The battery 17 supplies electric power to various electric components mounted in the agricultural machine 1.

FIG. 2 is a side view of the agricultural machine (rice transplanter) 1. The left side in FIG. 2 corresponds to the front of the traveling machine body 21 of the agricultural machine 1, and the right side in FIG. 2 corresponds to the rear of the traveling machine body 21. Additionally, the far side in FIG. 2 corresponds to the right of the traveling machine body 21, and the near side in FIG. 2 corresponds to the left of the traveling machine body 21. The traveling machine body 21 is supported by the front wheels 22F and the rear wheels 22R of the traveling device 12. A pair of left and right front wheels 22F and a pair of left and right rear wheels 22 are provided. The prime mover 11 and the transmission 14 are mounted in a front portion of the traveling machine body 21.

An operator's seat 24 is installed on an upper central portion of the traveling machine body 21. The steering wheel 23, an operation lever (reference sign omitted), and an operation panel 25 are installed on an upper portion of the traveling machine body 21 in front of the operator's seat 24. The operation panel 25 includes the above-described operating device 7, the display 8 (FIG. 1), and the like.

The coupler 16 is attached to a rear portion of the traveling machine body 21. The coupler 16 includes a four-link-type link mechanism 26 and a hydraulic cylinder 27. A proximal end of the link mechanism 26 is coupled to the traveling machine body 21 such that the link mechanism 26 is swingable upward and downward. The working implement (seedling planter) 10 is coupled to a distal end of the link mechanism 26. When a rod of the hydraulic cylinder 27 expands or contracts, the distal end of the link mechanism 26 swings upward or downward to raise or lower the working implement 10.

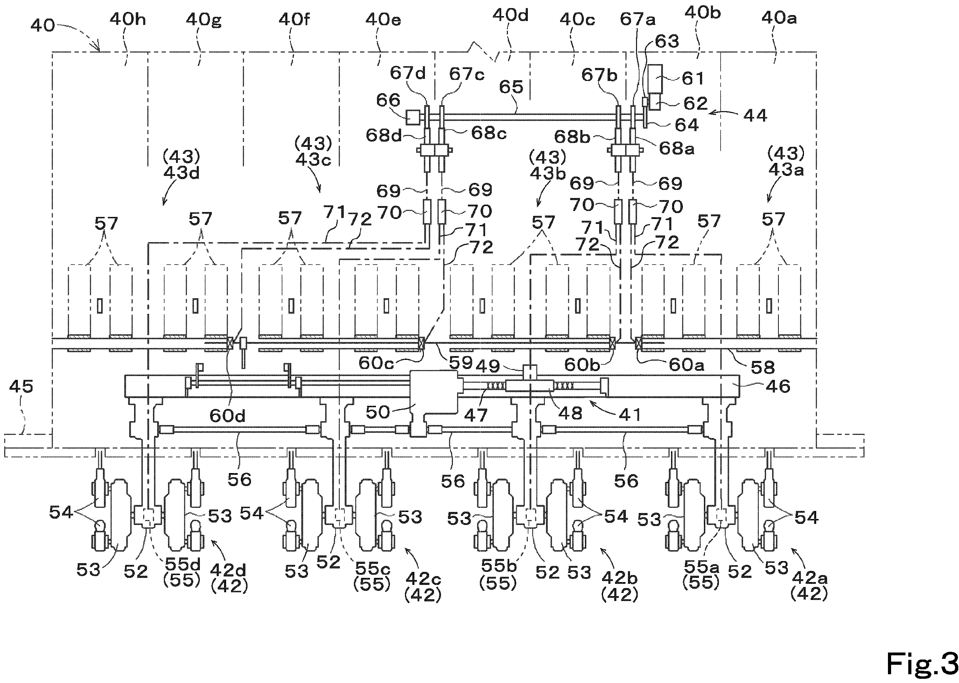

FIG. 3 illustrates the main part of the working implement (seedling planter) 10. Specifically, FIG. 3 illustrates the main part of the working implement 10 viewed from the traveling machine body 21 in FIG. 2. The working implement 10 of the present embodiment is an eight-row seedling planter. The working implement 10 includes a seedling table 40, a horizontal feeding mechanism 41, seedling-planting mechanisms 42, vertical feeding mechanisms 43, a clutch-switching mechanism 44, and the like.

The seedling table 40 is an accommodator that accommodates seedlings. The seedling table 40 is supported by a frame (reference sign omitted) of the working implement 10, a support rail 45, and the like and is inclined at a predetermined angle, as illustrated in FIG. 2. As illustrated in FIG. 3, plural (eight) placement units 40a to 40h for receiving mat-shaped seedling groups, in which the seedlings are collected, are formed on the seedling table 40 and arranged in a width direction (left-right direction) of the traveling machine body 21.

The horizontal feeding mechanism 41 reciprocates the seedling groups placed on the placement units 40a to 40h of the seedling table 40 in the width direction of the traveling machine body 21. The horizontal feeding mechanism 41 includes a spiral shaft 47, a feeding member 48 attached to the spiral shaft 47, and the like. The feeding member 48 and the seedling table 40 are coupled by a bracket 49. The spiral shaft 47 is rotatably supported by a transmission unit 50 and a support frame 46. The support frame 46 extends parallel to the width direction of the traveling machine body 21 and is coupled to a case of the transmission unit 50. The transmission unit 50 includes plural gears, shafts that support the gears, and the like, and transmits the power of the prime mover 11 transmitted through a PTO shaft 51 (FIG. 2) to each portion of the working implement 10.

The power of the prime mover 11 transmitted by the transmission unit 50 causes the spiral shaft 47 to rotate so that the feeding member 48 reciprocates along the spiral shaft 47 in the width direction of the traveling machine body 21, thereby causing the seedling table 40 to reciprocate along the support rail 45 in the width direction of the traveling machine body 21. Accordingly, the seedling groups placed on the placement units 40a to 40h of the seedling table 40 also reciprocate in the width direction of the traveling machine body 21.

The seedling-planting mechanisms 42 are examples of ground working mechanisms that perform ground work in the agricultural field, and are also examples of crop-planting mechanisms that plant seedlings in the agricultural field. Plural (four) seedling-planting mechanisms 42 are arranged in the width direction of the traveling machine body 21 at predetermined intervals. In the following description, the seedling-planting mechanisms 42 may be referred to as a first seedling-planting mechanism 42a, a second seedling-planting mechanism 42b, a third seedling-planting mechanism 42c, and a fourth seedling-planting mechanism 42d in that order from the left side of the traveling machine body 21 (right side in FIG. 3).

Each of the seedling-planting mechanisms 42 (42a to 42d) includes a transmission case 52, rotors 53, and planting arms 54. Plural (four) transmission cases 52 are coupled to the support frame 46 in a cantilever manner with predetermined intervals therebetween in the width direction of the traveling machine body 21. The power of the prime mover 11 is transmitted to each transmission case 52 through the transmission unit 50 and a transmission shaft 56. Each transmission case 52 contains a chain, a sprocket (not illustrated), a planting clutch 55, and the like.

The rotors 53 are rotatably supported on the left and right sides of each transmission case 52. The planting arms 54 are rotatably supported at both ends of each rotor 53. In other words, two rotors 53 and four planting arms 54 are provided in each of the seedling-planting mechanisms 42. More specifically, eight rotors 53 are provided to be in one-to-one correspondence with the placement units 40a to 40h of the seedling table 40. Sixteen planting arms 54 are provided in two-to-one correspondence with the placement units 40a to 40h.

The power of the prime mover 11 is transmitted to the rotors 53 through the PTO shaft 51, the transmission unit 50, the transmission shafts 56, the transmission cases 52, the chains in the transmission case 52, and the planting clutches 55 to rotate the rotors 53. Accordingly, the two planting arms 54 supported by each rotor 53 alternately extract a predetermined number of seedlings from a lower portion of the seedling group placed on a corresponding one of the placement units 40a to 40h on the seedling table 40, and plant the extracted seedlings into a paddy surface of the paddy field.

Plural (four) planting clutches 55 are provided such that the planting clutches 55 are in one-to-one correspondence with the seedling-planting mechanisms 42 and that each planting clutch 55 corresponds to two planting rows that are adjacent to each other. In the following description, the planting clutches 55 may be referred to as a first planting clutch 55a, a second planting clutch 55b, a third planting clutch 55c, and a fourth planting clutch 55d in that order from the left side of the traveling machine body 21 (right side in FIG. 3). The first planting clutch 55a corresponds to the first seedling-planting mechanism 42a, the second planting clutch 55b to the second first seedling-planting mechanism 42b, the third planting clutch 55c to the third first seedling-planting mechanism 42c, and the fourth planting clutch 55d to the fourth first seedling-planting mechanism 42d.

Each of the planting clutches 55 (55a to 55d) is switchable between an engaged state and a disengaged state. When each planting clutch 55 is in the engaged state, the power of the prime mover 11 is transmitted to the rotors 53 on the left and right sides of the clutch 55, causing the rotors 53 to rotate. When the rotors 53 rotate, the planting arms 54 supported by the rotors 53 extract the seedlings from the corresponding one of the placement units 40a to 40h and plant the extracted seedlings into the paddy surface. When each planting clutch 55 is in the disengaged state, the power of the prime mover 11 is not transmitted to the rotors 53 on the left and right sides of the clutch 55, so that the rotors 53 do not rotate (stopped state). When the rotors 53 do not rotate, the planting arms 54 supported by the rotors 53 do not extract the seedlings from the corresponding one of the placement units 40a to 40h or plant the seedlings into the paddy surface. Normally, each planting clutch 55 is in the engaged state due to the elastic force of a spring (not illustrated).

The vertical feeding mechanisms 43 are mechanisms that feed the seedling groups placed on the placement units 40a to 40h of the seedling table 40 downward. Plural (four) vertical feeding mechanisms 43 are provided to be in one-to-one correspondence with the seedling-planting mechanisms 42. In the following description, the vertical feeding mechanisms 43 may be referred to as a first vertical feeding mechanism 43a, a second vertical feeding mechanism 43b, a third vertical feeding mechanism 43c, and a fourth vertical feeding mechanism 43d in that order from the left side of the traveling machine body 21 (right side in FIG. 3). The first vertical feeding mechanism 43a corresponds to the first seedling-planting mechanism 42a, the second vertical feeding mechanism 43b to the second seedling-planting mechanism 42b, the third vertical feeding mechanism 43c to the third seedling-planting mechanism 42c, and the fourth vertical feeding mechanism 43d to the fourth seedling-planting mechanism 42d.

Each of the placement units 40a to 40h is provided with a pair of endless rotating belts 57. Each of the vertical feeding mechanisms 43 (43a to 43d) includes four endless rotating belts 57 provided on two adjacent placement units of the placement units 40a to 40h and one drive shaft 58 that rotates the four endless rotating belts 57 together. The drive shaft 58 of each vertical feeding mechanism 43 is coupled to a transmission shaft 59 through a feed clutch 60. In each vertical feeding mechanism 43, the power of the prime mover 11 is transmitted to the drive shaft 58 through the PTO shaft 51, the transmission unit 50, the transmission shaft 59, and the feed clutch 60 to cause the drive shaft 58 to rotate, thereby rotating the endless rotating belts 57 attached to the drive shaft 58 and feeding the seedling groups placed on the corresponding placement units of the placement units 40a to 40h downward.

Plural (four) feed clutches 60 are provided such that the feed clutches 60 are in one-to-one correspondence with the vertical feeding mechanisms 43 and that each feed clutch 60 corresponds to two planting rows that are adjacent to each other. In the following description, the feed clutches 60 may be referred to as a first feed clutch 60a, a second feed clutch 60b, a third feed clutch 60c, and a fourth feed clutch 60d in that order from the left side of the traveling machine body 21 (right side in FIG. 3). The first feed clutch 60a corresponds to the first vertical feeding mechanism 43a, the second feed clutch 60b to the second vertical feeding mechanism 43b, the third feed clutch 60c to the third vertical feeding mechanism 43c, and the fourth feed clutch 60d to the fourth vertical feeding mechanism 43d.

Each of the feed clutches 60 (60a to 60d) is switchable between an engaged state and a disengaged state. When each feed clutch 60 is in the engaged state, the power of the prime mover 11 is transmitted to the drive shaft 58 coupled to the feed clutch 60, causing the drive shaft 58 to rotate. When the drive shaft 58 rotates, the endless rotating belts 57 attached to the drive shaft 58 rotate, thereby feeding downward the seedling groups placed on the placement units of the placement units 40a to 40h that are provided with the endless rotating belts 57. When each feed clutch 60 is in the disengaged state, the power of the prime mover 11 is not transmitted to the drive shaft 58 coupled to the feed clutch 60, so that the drive shaft 58 does not rotate (stopped state). When the drive shaft 58 does not rotate, the endless rotating belts 57 attached to the drive shaft 58 do not rotate, so that the seedling groups placed on the placement units of the placement units 40a to 40h that are provided with the endless rotating belts 57 are not fed downward. Normally, each feed clutch 60 is in the engaged state due to the elastic force of a spring (not illustrated).

The planting clutches 55 and the feed clutches 60 are switched between the engaged state and the disengaged state by the clutch-switching mechanism 44. The clutch-switching mechanism 44 includes an electric motor 61, a speed reduction mechanism 62, gears 63 and 64, an operating shaft 65, a potentiometer 66, cams 67a to 67d, arms 68a to 68d, and wires 69, 71, and 72. The electric motor 61 and the speed reduction mechanism 62 are installed behind the seedling table 40 (on a surface free from the placement units 40a to 40h) with a bracket (not illustrated). The operating shaft 65 is rotatably installed behind the seedling table 40 with the bracket (not illustrated).

In FIG. 3, the gear 64 is coupled to a right end of the operating shaft 65, and meshes with the gear 63. The speed reduction mechanism 62 is coupled to the gear 63 and a rotating shaft of the electric motor 61. The cams 67a to 67d are attached to the operating shaft 65 with predetermined intervals therebetween. Plural (four) cams 67a to 67d are provided to be in one-to-one correspondence with the seedling-planting mechanisms 42 and in one-to-one correspondence with the vertical feeding mechanisms 43. The power of the electric motor 61 (rotational force of the rotating shaft) is transmitted to the operating shaft 65 through the speed reduction mechanism 62 and the gears 63 and 64 to cause the operating shaft 65 to rotate, thereby rotating the cams 67a to 67d. The potentiometer 66 detects a rotation angle of the operating shaft 65.

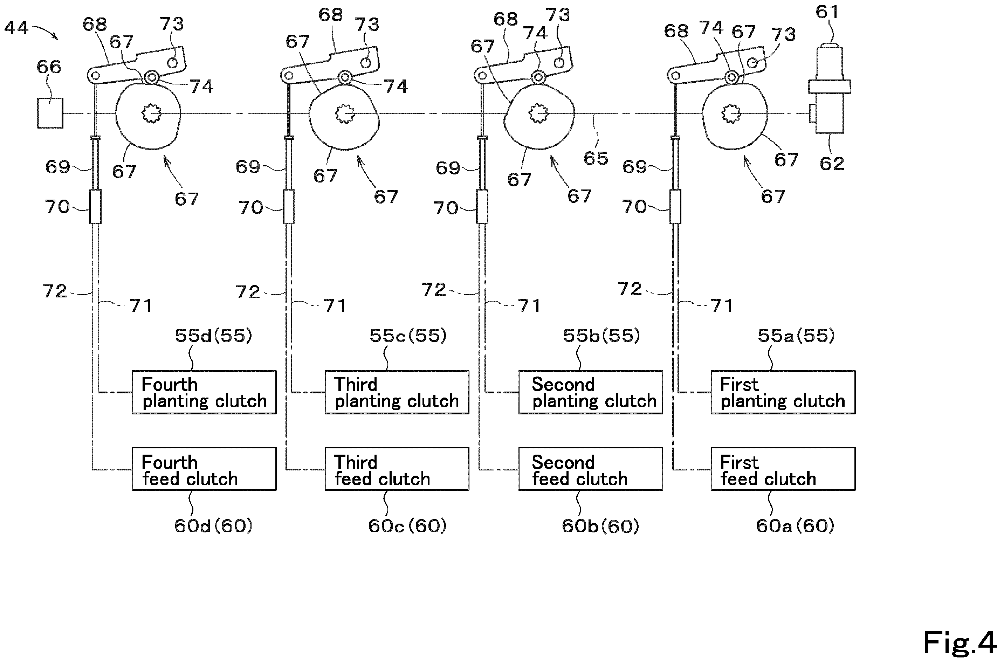

FIG. 4 is a schematic diagram illustrating a state of cooperation between the clutch-switching mechanism 44, the planting clutches 55, and the feed clutches 60. As illustrated in FIG. 4, each of the cams 67a to 67d has a peripheral surface including a first cam surface 67x and a second cam surface 67y. Each of the cams 67a to 67d is formed such that the distance between the center thereof (axial center of the operating shaft 65) to the second cam surface 67y is longer than the distance between the center thereof to the first cam surface 67x. When viewed in the axial direction of the operating shaft 65, the cams 67a to 67d are attached to the operating shaft 65 such that the positions of the first cam surfaces 67x and the second cam surfaces 67y are shifted from each other by predetermined phases (rotation angles).

Plural (four) arms 68a to 68d are provided to be in one-to-one correspondence with the cams 67a to 67d. A proximal end of each of the arms 68a to 68d is supported on a bracket (not illustrated) with a support shaft 73. The bracket is fixed to a back surface of the seedling table 40. A roller 74 is attached to a central portion of each of the arms 68a to 68d. Each roller 74 is in contact with a peripheral surface of the corresponding one of the cams 67a to 67d.

A distal end of each of the arms 68a to 68d is coupled to an upper end of one of the wires 69. A lower end of each wire 69 is coupled to a branching member 70. Two wires 71 and 72 extend from the branching member 70. A distal end of the wire 71 is coupled to the corresponding one of the planting clutches 55 (55a to 55d), and a distal end of the wire 72 is coupled to the corresponding one of the feed clutches 60 (60a to 60d).

When the cams 67a to 67d are rotated together with the operating shaft 65 by the power of the electric motor 61, the rollers 74 on the arms 68a to 68d come into contact with the first cam surfaces 67x and the second cam surfaces 67y of the corresponding cams 67a to 67d, causing the arms 68a to 68d to rotate about the support shafts 73. When the rollers 74 are in contact with the first cam surfaces 67x of the cams 67a to 67d, the arms 68a to 68d do not pull the wires 69, 71, and 72 coupled thereto, so that the corresponding planting clutches 55 (55a to 55d) and the corresponding feed clutches 60 (60a to 60d) are in the engaged state due to the elastic force of the springs (not illustrated). When the rollers 74 move onto (are in contact with) the second cam surfaces 67y of the cams 67a to 67d, the arms 68a to 68d pull the wires 69, 71, and 72 coupled thereto, so that the corresponding planting clutches 55 (55a to 55d) and the corresponding feed clutches 60 (60a to 60d) are set to the disengaged state.

Since the cams 67a to 67d are attached to the operating shaft 65 such that the positions of the first cam surfaces 67x and the second cam surfaces 67y are shifted from each other by predetermined phases, as illustrated in FIG. 4, the state of cooperation between the cams 67a to 67d, the arms 68a to 68d, the planting clutches 55, and the feed clutches 60 changes between eight patterns depending on the rotation angle of the operating shaft 65. Specifically, in the state illustrated in FIG. 4, the rollers 74 on all of the arms 68a to 68d are in contact with the first cam surfaces 67x of all of the cams 67a to 67d, so that all of the planting clutches 55 (55a to 55d) and the feed clutches 60 (60a to 60d) are in the engaged state.

When, for example, the operating shaft 65 and the cams 67a to 67d in the state illustrated in FIG. 4 are rotated counterclockwise by a predetermined angle by the power of the electric motor 61, only the roller 74 on the arm 68a comes into contact with the second cam surface 67y of the cam 67a, so that only the first planting clutch 55a and the first feed clutch 60a are set to the disengaged state. Then, each time the operating shaft 65 and the cams 67a to 67d are further rotated counterclockwise by a predetermined angle, the roller 74 on the arm 68b comes into contact with the second cam surface 67y of the cam 67b so that the second planting clutch 55b and the second feed clutch 60b are also set to the disengaged state, the roller 74 on the arm 68c comes into contact with the second cam surface 67y of the cam 67c so that the third planting clutch 55c and the third feed clutch 60c are also set to the disengaged state, and the roller 74 on the arm 68d comes into contact with the second cam surface 67y of the cam 67d so that the fourth planting clutch 55d and the fourth feed clutch 60d are also set to the disengaged state.

Additionally, when, for example, the operating shaft 65 and the cams 67a to 67d are further rotated counterclockwise by a predetermined angle from the state in which the rollers 74 on all of the arms 68a to 68d are in contact with the second cam surfaces 67y of all of the cams 67a to 67d and in which all of the planting clutches 55 (55a to 55d) and the feed clutches 60 (60a to 60d) are in the disengaged state, the roller 74 on the arm 68a comes into contact with the first cam surface 67x of the cam 67a, so that the first planting clutch 55a and the first feed clutch 60a are set to the engaged state. Then, each time the operating shaft 65 and the cams 67a to 67d are further rotated counterclockwise by a predetermined angle, the roller 74 on the arm 68b comes into contact with the first cam surface 67x of the cam 67b so that the second planting clutch 55b and the second feed clutch 60b are also set to the engaged state, the roller 74 on the arm 68c comes into contact with the first cam surface 67x of the cam 67c so that the third planting clutch 55c and the third feed clutch 60c are also set to the engaged state, and the roller 74 on the arm 68d comes into contact with the first cam surface 67x of the cam 67d so that the fourth planting clutch 55d and the fourth feed clutch 60d are also set to the engaged state.

The controller 3 (FIG. 1) controls the driving of the electric motor 61 to change the rotation angle of the operating shaft 65, and thereby switches each of the planting clutches 55a to 55d and each of the feed clutches 60a to 60d between the engaged state and the disengaged state to switch the corresponding one of the seedling-planting mechanisms 42a to 42d and the corresponding one of the vertical feeding mechanisms 43a to 43d between an activated state and a stopped state.

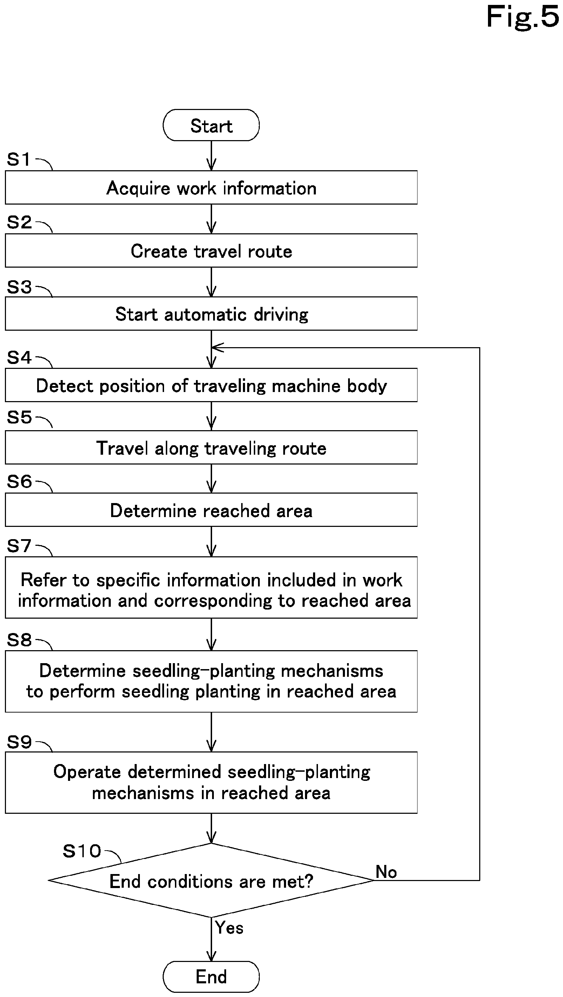

FIG. 5 is a flowchart of an example of an operation of the agricultural machine 1. Each step in FIG. 5 is performed by the controller 3 in accordance with a software program stored in the internal memory. First, the controller 3 acquires work information corresponding to an agricultural field to be worked in which ground work (seedling planting) is to be performed (S1). The work information is created by the assistor 2. For example, the controller 3 determines an agricultural field including the current position of the traveling machine body 21 detected by the positioning device 6 as the agricultural field to be worked, and acquires (receives) the work information corresponding to the agricultural field to be worked from the assistor 2 through the communicator 9. The controller 3 stores the acquired work information in the internal memory or a predetermined storage region in the storage 4.

As another example, the work information created by the assistor 2 may be temporarily stored in a server (not illustrated) provided outside the agricultural machine 1, and the controller 3 may acquire the work information corresponding to the agricultural field to be worked from the server through the communicator 9. Alternatively, the work information created by the assistor 2 may be temporarily stored in a portable memory and, when the portable memory is connected to a connection port (not illustrated) included in the communicator 9, the controller 3 may acquire the work information corresponding to the agricultural field to be worked from the portable memory. Alternatively, for example, the controller 3 may acquire plural sets of work information created by the assistor 2 from a server or a portable memory in advance, and store the acquired sets of work information in the storage 4. After that, the controller 3 may determine the agricultural field including the current position of the traveling machine body 21 detected by the positioning device 6 as the agricultural field to be worked and acquire (read) the work information corresponding to the agricultural field to be worked from the storage 4.

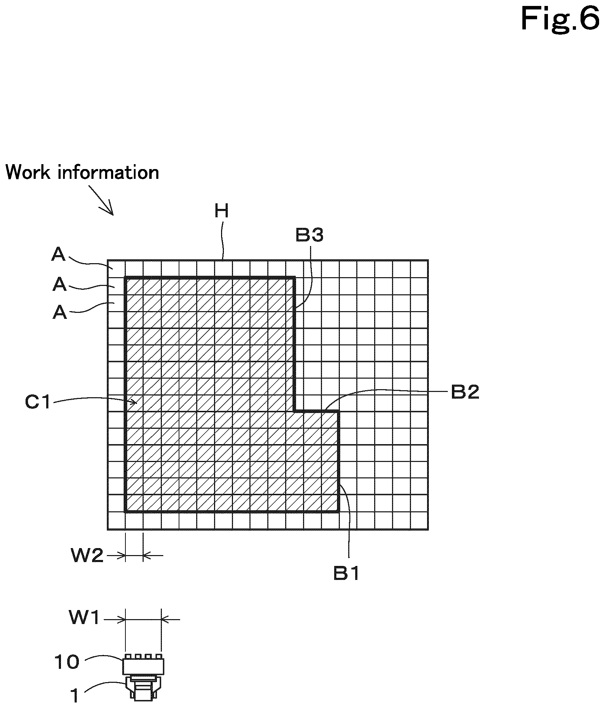

FIG. 6 illustrates an example of the work information. In the example illustrated in FIG. 6A, an agricultural field H having a rectangular outline is divided into plural areas A. Specifically, each of the squares in the agricultural field H is an area A. A width W2 of each area A (length of each side of the squares) is less than a working width W1 (width of eight rows along which the seedlings are planted) of the working implement (seedling planter) 10 of the agricultural machine (rice transplanter) 1. More specifically, the width W2 of each area A is set to one-half of the working width W1 (width of eight rows) of the working implement (seedling planter) 10 (W2 = W1×1/2).

The work information includes work information indicating, with regard to each of the areas A formed by diving the agricultural field H, whether or not to perform seedling planting (ground work) in a corresponding one of the areas A. More specifically, the work information indicates positions (e.g., coordinates) of the respective areas A and each indicate whether or not to perform seedling planting in a corresponding one of the areas A by using the seedling-planting mechanisms 42a to 42d. Additionally, to indicate the areas A, the work information also includes information indicating the position (e.g., coordinates) and an outline H1 of the agricultural field H.

In the example illustrated in FIG. 6, a hatched region C1 in the agricultural field H is a ground-worked region in which the working implement (seedling planter) 10 plants one variety of seedlings. Among the areas A included in the ground-worked region C1, areas A with which boundary lines B1, B2, and B3 on the right side of the region C1 intersect are areas A in which at least one of the seedling-planting mechanisms 42a to 42d does not perform the ground work.

The above-described work information is created by the assistor 2, as described above. More specifically, for example, an operator sets the ground-worked region C1 by operating an input interface, such as an operating key, included in the assistor 2 while viewing the outline of the agricultural field H displayed on a display unit included in the assistor 2. Then, a CPU included in the assistor 2 divides the agricultural field H into plural areas A and creates the work information by associating each of the areas A with information indicating whether or not to perform seedling planting. Additionally, the CPU of the assistor 2 creates the work information such that the work information includes information indicating that at least one of the seedling-planting mechanisms 42a to 42d does not perform the ground work in the areas A with which the boundary lines of the ground-worked region C1 intersect. The input interface of the assistor 2 may be operated to specify the variety of the seedlings to be planted in the ground-worked region C1, and the specified variety of seedlings may be included in the work information. Additionally, the input interface of the assistor 2 may be operated to set the width W2 of the areas A.

When the controller 3 acquires the work information (S1 in FIG. 5), the controller 3 creates a travel route Ls of the traveling machine body 21 for performing the ground work in the agricultural field H based on the work information and the working width W1 of the working implement (seedling planter) 10 (S2). At this time, the controller 3 may create the travel route Ls by additionally taking the outer dimensions of the traveling machine body 21 and the working implement (seedling planter) 10 into consideration.

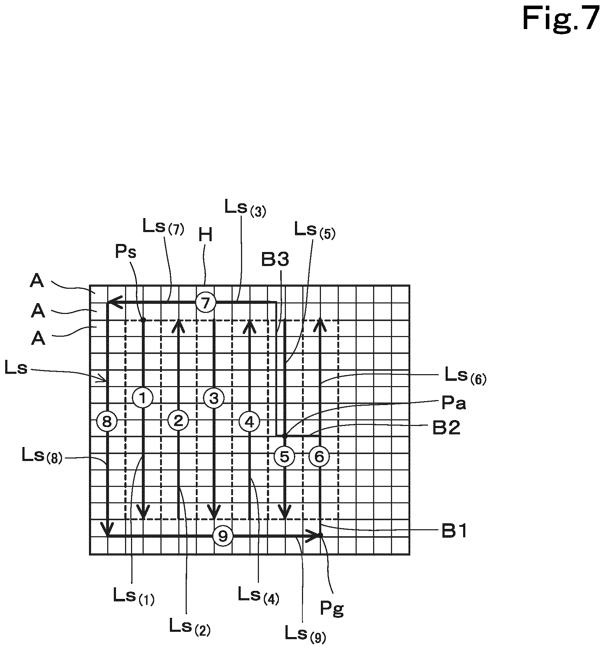

FIG. 7 illustrates an example of the travel route Ls of the traveling machine body 21. The travel route Ls illustrated in FIG. 7 is a virtual travel route of the traveling machine body 21 for causing the working implement (seedling planter) 10 to perform the ground work in the ground-worked region C1 of the agricultural field H. The travel route Ls includes plural straight routes Ls₍₁₎ to L1₍₉₎ along which the traveling machine body 21 is caused to travel straight. The arrows of the straight routes Ls₍₁₎ to Ls₍₉₎ indicate moving directions of the traveling machine body 21. The circled numbers 1 to 9 on the straight routes Ls₍₁₎ to Ls₍₉₎ show the order in which the traveling machine body 21 travels. The tail end of the arrow of the straight route Ls₍₁₎ is a start position Ps of the travel route Ls, and the pointed end of the arrow of the straight route Ls₍₉₎ is an end position Pg of the travel route Ls.

When a worker operates the agricultural machine (rice transplanter) 1 to move the traveling machine body 21 to the start position Ps of the travel route Ls in the agricultural field H and then turns on an automatic driving switch included in the operating device 7, the controller 3 starts automatic driving of the agricultural machine (rice transplanter) 1 (S3 in FIG. 5). Here, in the automatic driving, the controller 3 automatically moves (adjusts the traveling speed) and steers the traveling machine body 21, and automatically performs raising/lowering and the seedling planting operation of the working implement (seedling planter) 10.

After starting the automatic driving (S3), the controller 3 causes the positioning device 6 to detect the position of the traveling machine body 21 at a predetermined cycle (S4), causes the link mechanism 26 (FIG. 2) to lower the working implement (seedling planter) 10, and causes the traveling machine body 21 to travel along the travel route Ls (S5). Additionally, based on the position of the traveling machine body 21 detected by the positioning device 6, the controller 3 determines the area A that the traveling machine body 21 has reached among the areas A (S6).

Additionally, the controller 3 refers to specific information included in the work information and indicating whether or not to perform the ground work in the area A reached by the traveling machine body 21 (S7), and determines one or more seedling-planting mechanisms of the seedling-planting mechanisms 42a to 42d that are to perform seedling planting in the area A reached by the traveling machine body 21 (S8). At this time, the controller 3 determines the one or more seedling-planting mechanisms that are to perform seedling planting in the area A reached by the traveling machine body 21 based on the above-described specific information, the position of one of the straight routes Ls₍₁₎ to L1₍₉₎ along which the traveling machine body 21 is traveling, and the traveling direction. Here, the controller 3 determines the traveling direction of the traveling machine body 21 based on the moving directions of the straight routes Ls₍₁₎ to L1₍₉₎ or a change in the position of the traveling machine body 21 detected by the positioning device 6. When the seedling planter 10 reaches the area A that has been reached by the traveling machine body 21, the controller 3 operates the one or more seedling-planting mechanisms of the seedling-planting mechanisms 42a to 42d determined to perform seedling planting in the reached area A (S9).

Specifically, when the traveling machine body 21 travels along the straight route Ls₍₁₎, the traveling machine body 21 successively reaches the areas A on the left and right sides of the straight route Ls₍₁₎ as viewed in the moving direction, and the above-described specific information indicates that seedling planting is to be performed in the entireties of these areas A. In other words, the above-described specific information indicates that all of the seedling-planting mechanisms 42a to 42d are to perform seedling planting. Therefore, the controller 3 determines that all of the seedling-planting mechanisms 42a to 42d are to perform seedling planting in the areas A reached by the traveling machine body 21 among the areas A on the left and right sides of the straight route Ls₍₁₎ (S8). Then, when the working implement (seedling planter) 10 reaches the areas A that have been reached by the traveling machine body 21, the controller 3 causes the clutch-switching mechanism 44 to set all of the planting clutches 55 and the feed clutches 60 to the engaged state to operate all of the seedling-planting mechanisms 42a to 42d (S9), so that all of the seedling-planting mechanisms 42a to 42d perform seedling planting as the working implement (seedling planter) 10 passes through the reached areas A.

Until the traveling machine body 21 and the working implement (seedling planter) 10 reach the end position Pg of the travel route Ls, the controller 3 determines that end conditions are not met (NO in S10 in FIG. 5) and repeats steps S4 to S10.

When the traveling machine body 21 and the working implement (seedling planter) 10 reach an end point (pointed end of the arrow) of any of the straight routes Ls₍₁₎ to Ls₍₈₎ in FIG. 7, the controller 3 turns the traveling machine body 21 toward a start point (tail end of arrow) of the next straight route. At this time, the controller 3 causes the link mechanism 26 to raise the working implement (seedling planter) 10 so that the seedling-planting mechanisms 42a to 42d do not perform seedling planting. Then, when the traveling machine body 21 reaches the start point of the next straight route and when the moving direction of the traveling machine body 21 coincides with the moving direction of the next straight route, the link mechanism 26 is caused to lower the working implement (seedling planter) 10, and the traveling machine body 21 is caused to travel along the next straight route.

When the traveling machine body 21 travels along the straight routes Ls₍₂₎ to L1₍₄₎, similarly to the above-described case in which the traveling machine body 21 travels along the straight route Ls₍₁₎ as described above, the controller 3 determines that all of the seedling-planting mechanisms 42a to 42d are to perform seedling planting in the areas A reached by the traveling machine body 21 (S8 in FIG. 5), and causes all of the seedling-planting mechanisms 42a to 42d to operate as the working implement (seedling planter) 10 passes through the reached areas A (S9).

When the traveling machine body 21 travels along the straight route Ls₍₅₎, the traveling machine body 21 successively reaches the areas A on the left and right sides of the straight route Ls₍₅₎ as viewed in the moving direction. The work information indicates that, among the areas A present between the start point of the straight route Ls₍₅₎ (tail end of the arrow) and a switching position Pa at which the straight route Ls₍₅₎ crosses the boundary line B2 of the ground-worked region C1, seedling planting is not to be performed in the entireties of the areas A on the left side of the straight route Ls₍₅₎ as viewed in the moving direction (right side in FIG. 7). More specifically, the specific information included in the work information and corresponding to the above-described areas A indicates that seedling planting is not to be performed in the entireties of these areas A. In other words, the specific information included in the work information and corresponding to the above-described areas A indicates that the first seedling-planting mechanism 42a and the second seedling-planting mechanism 42b that pass through the above-described areas A are not to perform seedling planting.

Additionally, for the areas A that are present between the start point of the straight route Ls₍₅₎ and the switching position Pa and that are on the right side of the straight route Ls₍₅₎ as viewed in the moving direction (left side in FIG. 7), the corresponding specific information included in the work information indicates that seedling planting is not to be performed in the left halves of these areas A (right halves in FIG. 7) but to be performed in the right halves of the areas A (left halves in FIG. 7). In other words, the specific information indicates that, of the third seedling-planting mechanism 42c and the fourth seedling-planting mechanism 42d that pass through these areas A, the third seedling-planting mechanism 42c is not to perform seedling planting but the fourth seedling-planting mechanism 42d is to perform seedling planting.

Therefore, until the traveling machine body 21 reaches the switching position Pa on the straight route Ls₍₅₎, the controller 3 determines that in the areas A reached by the traveling machine body 21 among the areas A on the left and right sides of the straight route Ls₍₅₎, the fourth seedling-planting mechanism 42d is to perform seedling planting (S8 in FIG. 5), and that the first to third seedling-planting mechanisms 42a to 42c are not to perform seedling planting. Then, when the working implement (seedling planter) 10 reaches the areas A that have been reached by the traveling machine body 21, the controller 3 causes the clutch-switching mechanism 44 to set the first to third planting clutches 55a to 55c and the first to third feed clutches 60a to 60c to the disengaged state so that the first to third seedling-planting mechanisms 42a to 42c are not operated, and the fourth planting clutch 55d and the fourth feed clutch 60d to the engaged state so that the fourth seedling-planting mechanism 42d is operated (S9). Thus, only the fourth seedling-planting mechanism 42d performs seedling planting when the working implement (seedling planter) 10 passes through the reached areas A.

Additionally, from when the traveling machine body 21 reaches the switching position Pa on the straight route Ls₍₅₎ until when the traveling machine body 21 and the working implement (seedling planter) 10 reach the end point (pointed end of the arrow) of the straight route Ls₍₅₎, similarly to the above-described case in which the traveling machine body 21 travels along the straight route Ls₍₁₎, the controller 3 determines that all of the seedling-planting mechanisms 42a to 42d are to perform seedling planting in the areas A reached by the traveling machine body 21 (S8 in FIG. 5). Then, the controller 3 causes all of the seedling-planting mechanisms 42a to 42d to operate as the working implement (seedling planter) 10 passes through the above-described reached areas A (S9).

When the traveling machine body 21 travels along the straight routes Ls₍₆₎ to L1₍₉₎, the traveling machine body 21 successively reaches the areas A on the left and right sides of the straight routes Ls₍₆₎ to L1₍₉₎ as viewed in the moving direction. For the areas A on the right side of the straight routes Ls₍₆₎ to L1₍₉₎ as viewed in the moving direction, the specific information included in the work information and corresponding to these areas A indicates that seedling planting is not to be performed in the entireties of these areas A. In other words, the above-described specific information indicates that the first seedling-planting mechanism 42a and the second seedling-planting mechanism 42b passing through these areas A are not to perform seedling planting.

Additionally, for the areas A on the left side of the straight routes Ls₍₆₎ to L1₍₉₎ as viewed in the moving direction, the specific information included in the work information and corresponding to these areas A indicates that seedling planting is to be performed. In other words, the above-described specific information indicates that the third seedling-planting mechanism 42c and the fourth seedling-planting mechanism 42d passing through these areas A are to perform seedling planting.

Therefore, the controller 3 determines that in the areas A reached by the traveling machine body 21 among the areas A on the left and right sides of the straight routes Ls₍₆₎ to L1₍₉₎, the third seedling-planting mechanism 42c and the fourth seedling-planting mechanism 42d are to perform seedling planting (S8 in FIG. 5), and that the first seedling-planting mechanism 42a and the second seedling-planting mechanism 42b are not to perform seedling planting.

Then, when the working implement (seedling planter) 10 reaches the areas A that have been reached by the traveling machine body 21, the controller 3 causes the clutch-switching mechanism 44 to set the first planting clutch 55a, the second planting clutch 55b, the first feed clutch 60a, and the second feed clutch 60b to the disengaged state so that the first seedling-planting mechanism 42a and the second seedling-planting mechanism 42b are not operated, and the third planting clutch 55c, the fourth planting clutch 55d, the third feed clutch 60c, and the fourth feed clutch 60d to the engaged state so that the third seedling-planting mechanism 42c and the fourth seedling-planting mechanism 42d are operated (S9). Thus, the third seedling-planting mechanism 42c and the fourth seedling-planting mechanism 42d perform seedling planting when the working implement (seedling planter) 10 passes through the reached areas A.

When the traveling machine body 21 and the seedling planter 10 reach the end position Pg of the travel route Ls, the controller 3 determines that the end conditions are met (YES in S10) and ends the automatic driving of the agricultural machine (rice transplanter) 1 and the work in the agricultural field H. As a result, as illustrated in FIG. 6, seedling planting is performed by the agricultural machine (rice transplanter) 1 and the working implement (seedling planter) 10 in the ground-worked region C1 of the agricultural field H.

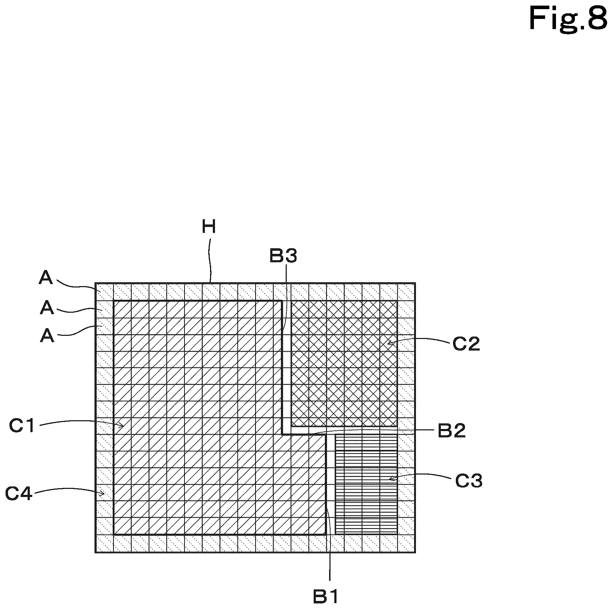

Seedlings of other varieties, for example, are planted in a region of the agricultural field H other than the ground-worked region C1. FIG. 8 illustrates an example of the agricultural field H that has undergone seedling planting. In the example of FIG. 8, seedlings of a variety different from that of the seedlings planted in the ground-worked region C1 are planted in a rectangular region C2 of a region of the agricultural field H other than the ground-worked region C1. Additionally, seedlings of a variety different from those of the seedlings planted in regions C1 and C2 are planted in a rectangular region C3. Furthermore, seedlings of a variety different from those of the seedlings planted in the ground-worked regions C1 to C3 are planted in a frame-shaped region C4 along the outline H1 of the agricultural field H. Seedlings of plants of a family other than the Poaceae family may be planted in the regions C2 to C4. Additionally, for example, seedlings of plants with bright colored flowers may be planted in the frame-shaped region (levee edge) C4 along the outline of the agricultural field H and on the levee of the agricultural field H4.

Additionally, seedling planting in the regions C2 to C4 of the agricultural field H may be performed either by using the rice transplanter 1 and the seedling planter 10, or manually. When seedling planting in the regions C2 to C4 is performed by using the rice transplanter 1 and the seedling planter 10, the assistor 2 may create plural sets of work information corresponding to the respective regions C2 to C4. In this case, the controller 3 may acquire the plural sets of work information from the assistor 2 or the like, and plant the seedlings corresponding to each of the regions C2 to C4 while automatically driving the agricultural machine (rice transplanter 1) and the working implement (seedling planter) 10 based on each set of work information.

In the above-described embodiment, the controller 3 starts automatic driving of the agricultural machine (rice transplanter 1) 1 and then determines one or more seedling-planting mechanisms of the seedling-planting mechanisms 42a to 42d that are to perform seedling planting in each of the areas A of the agricultural field H. However, the present invention is not limited to this.

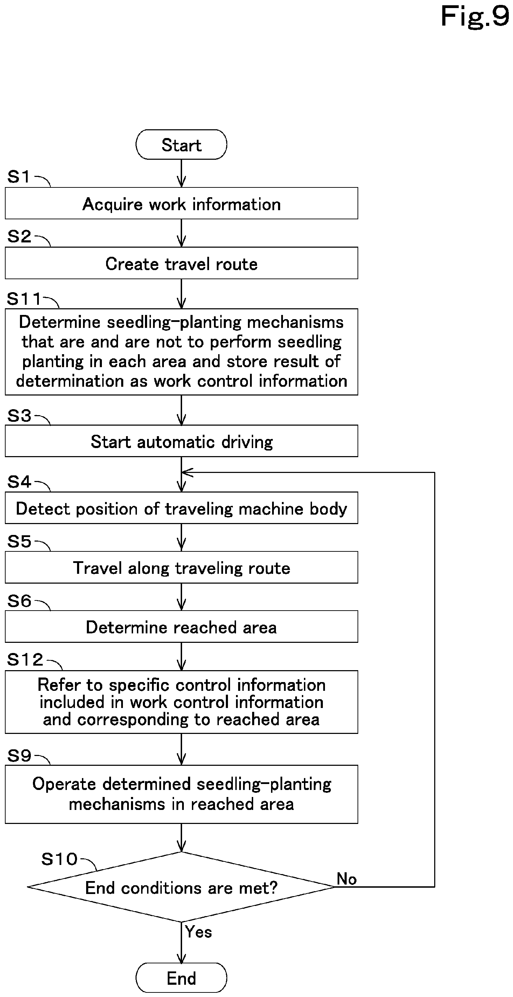

For example, as illustrated in FIG. 9, after creating the travel route Ls (S2) and before starting automatic driving based on the travel route Ls (S3), the controller 3 may determine one or more seedling-planting mechanisms of the seedling-planting mechanisms 42a to 42d that are and are not to perform seedling planting in each of the areas A of the agricultural field H based on the work information, the travel route Ls, and the like, and store the result of the determination as work control information in the storage 4 (S11). Then, after performing steps S3 to S6, the controller 3 may refer to specific control information included in the work control information and corresponding to the area A reached by the traveling machine body 21 (S12), and operate one or more seedling-planting mechanisms determined to perform seedling planting in the area A reached by the traveling machine body 21 when the working implement (seedling planter) 10 reaches the area A (S9).

In the above-described embodiment, the controller 3 creates the travel route Ls of the traveling machine body 21. However, the present invention is not limited to this. Alternatively, for example, the assistor 2 may create the travel route Ls of the traveling machine body 21 and include the travel route Ls in the work information. Additionally, the assistor 2 may determine, based on the travel route Ls and the positions (arrangement) of the seedling-planting mechanisms 42a to 42d, one or more seedling-planting mechanisms of the seedling-planting mechanisms 42a to 42d that are to perform the ground work (seedling planting) in each area A of the agricultural field H (and/or one or more seedling-planting mechanisms that are not to perform the ground work) and include the result of the determination in the work information. In this case, when the traveling machine body 21 travels through each area A during automatic driving of the agricultural machine (rice transplanter) 1 in the agricultural field H, the controller 3 refers to the information included in the work information and corresponding to the area A, so that the controller 3 can immediately determine one or more seedling-planting mechanisms that are to perform ground work (seedling planting) and operate the determined seedling-planting mechanisms. Thus, the process speed can be increased.

In the above-described embodiment, the controller 3 determines one or more seedling-planting mechanisms that are to perform seedling planting in each of the areas A of the agricultural field H based on the work information and operates the determined seedling planters when the controller 3 performs automatic driving of the agricultural machine (rice transplanter) 1. However, the present invention is not limited to this. Alternatively, for example, the controller 3 may determine one or more seedling-planting mechanisms that are to perform seedling planting in each of the areas A of the agricultural field H based on the work information and operate the determined seedling planters also in the case of auto-steering (also referred to as "half automatic driving") and manual driving. In auto-steering, the worker controls the traveling speed of the traveling machine body 21 by using an accelerator member, a brake member, a gear shifting member, and the like included in the operating device 7, and the controller 3 controls steering of the traveling machine body 21. In manual driving, the worker controls the traveling speed of the traveling machine body 21 and steering of the traveling machine body 21. Additionally, when auto-steering or manual driving of the agricultural machine (rice transplanter) 1 is performed, the travel route Ls does not need to be created, and the worker may cause the traveling machine body 21 to travel along any route.

The agricultural machine (rice transplanter) 1 and the agricultural work assistance system 100 described above may be used to create a desired artwork, such as patterns, characters, or logo marks in an agricultural field by performing ground work in the agricultural field. The art created in the agricultural field, called "paddy field art" or "rice paddy art," is gaining attention as a form of advertisement in consideration of enhancement of interest in agriculture, regional promotion, and environmental conservation.

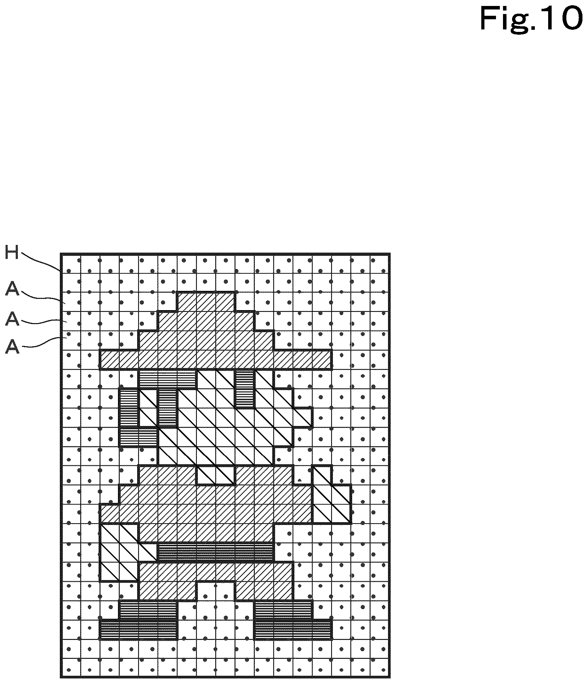

FIG. 10 illustrates an example of an artwork created by causing the agricultural machine (rice transplanter) 1 to perform seedling planting in the agricultural field H. To create the artwork of a human shape illustrated in FIG. 10 in the agricultural field H by using the agricultural machine (rice transplanter) 1, an operator, for example, inputs data of an image based on which the artwork is created into the assistor 2 through the input interface of the assistor 2, superimposes the image onto the agricultural field H displayed on the display unit of the assistor 2, and adjusts the size of the image. Then, the operator sets (inputs) the varieties of seedlings to be used to form respective portions of the image displayed on the display unit through the input interface of the assistor 2.

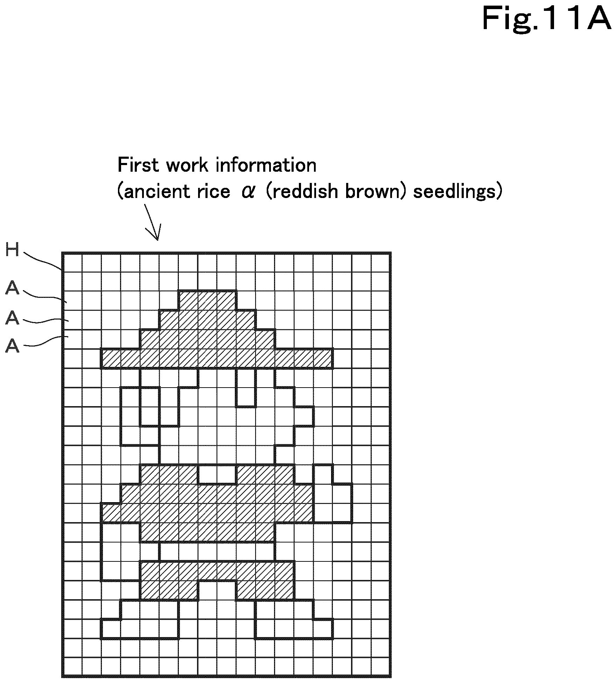

The CPU of the assistor 2 creates the work information for each variety of the seedlings that is set. For example, when the image of the artwork illustrated in FIG. 10 is in four colors, the operator sets four types of seedlings of the Poaceae family with different leaf colors, and accordingly the CPU of the assistor 2 creates four sets of work information illustrated in FIGS. 11A to 11D. FIGS. 11A to 11D are examples of first work information to fourth work information for respective varieties of seedlings used to create the artwork of FIG. 10 in the agricultural field H.

For example, the CPU of the assistor 2 separates the image illustrated in FIG. 10 into images of different colors as illustrated in FIGS. 11A to 11D, and divides the agricultural field H including each of the separate images into plural areas A. Then, the CPU of the assistor 2 determines whether or not seedling planting is to be performed in each of the areas A based on the color information of each of the areas A illustrated in FIGS. 11A to 11D, and creates first work information to fourth work information including information of the areas A and the result of the determination associated with each of the areas A.

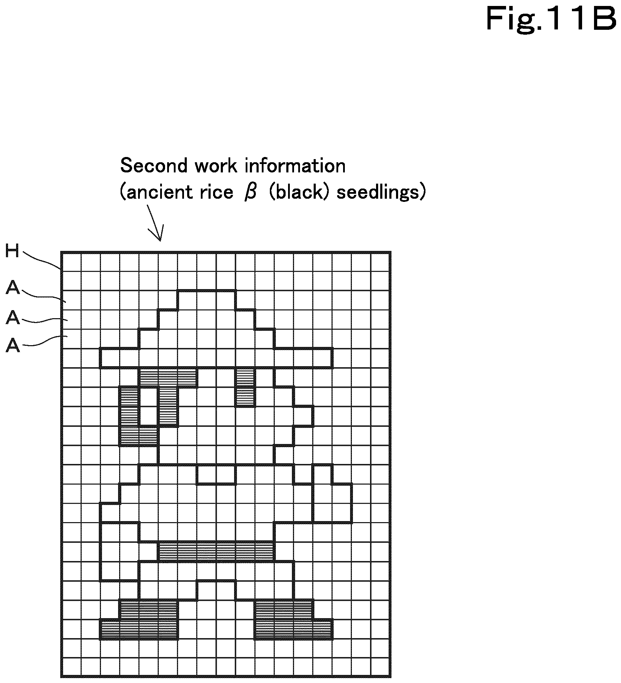

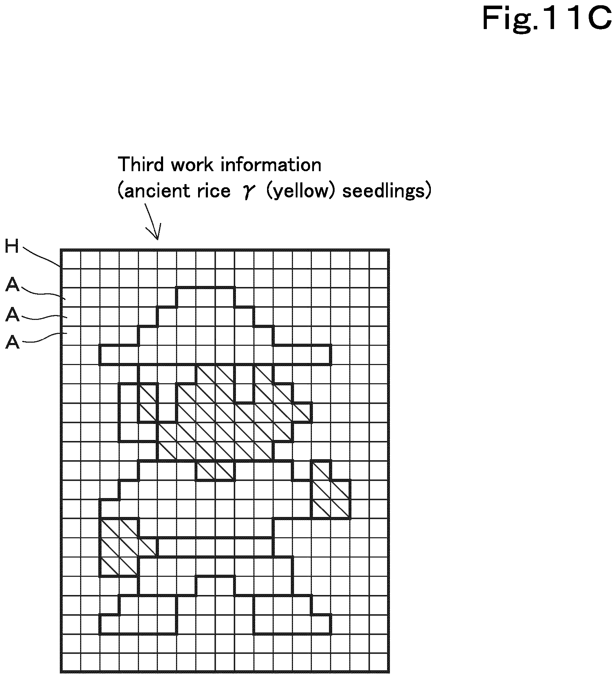

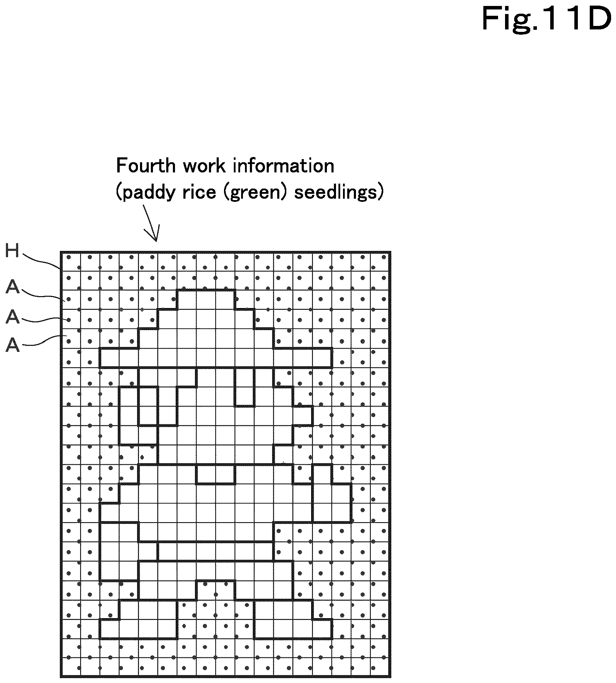

The first work information illustrated in FIG. 11A indicates that seedlings of ancient rice α having reddish brown leaves are to be planted in the hatched regions of the agricultural field H and that the seedlings are not to be planted in other regions. The second work information illustrated in FIG. 11B indicates that seedlings of ancient rice β having black leaves are to be planted in the hatched regions of the agricultural field H and that the seedlings are not to be planted in other regions. The third work information illustrated in FIG. 11C indicates that seedlings of ancient rice γ having yellow leaves are to be planted in the hatched regions of the agricultural field H and that the seedlings are not to be planted in other regions. The fourth work information illustrated in FIG. 11D indicates that seedlings of paddy rice having green leaves are to be planted in the hatched regions of the agricultural field H and that the seedlings are not to be planted in other regions.

In accordance with the procedure illustrated in FIG. 5 or FIG. 9, the controller 3 of the agricultural machine (rice transplanter) 1 acquires each of the plural sets of work information (first work information to fourth work information) illustrated in FIGS. 11A to 11D and causes the seedling planter 10 to plant the four varieties of seedlings in the agricultural field H based on each set of work information. In other words, the steps illustrated in FIG. 5 or FIG. 9 are repeatedly performed for each set of work information (each variety of seedlings) by the controller 3. After step S1 and before step S3 in FIG. 5 or FIG. 9, the display 8 may be caused to display information indicating that seedlings of the corresponding variety are to be placed on the seedling table 40. Additionally, in step S2 of FIG. 5 or FIG. 9, the travel routes Ls created for the plural sets of work information may be the same or differ from each other.

After the controller 3 has caused the seedling planter 10 to perform seedling planting in the agricultural field H in accordance with the procedure illustrated in FIG. 5 or FIG. 9 based on the plural sets of work information illustrated in FIGS. 11A to 11D, the planted seedlings grow, so that the artwork is created in the agricultural field H as illustrated in FIG. 10. Conventionally, when creating an artwork by planting seedlings of paddy rice and ancient rice in an agricultural field (paddy field), the drafting of the image based on which the artwork is created and the planting of the seedlings have been performed manually. Since an artwork can be created by causing the agricultural machine 1 to perform seedling planting in the agricultural field as described above, the manual workload can be reduced.

In the above-described embodiment, the power of a single electric motor 61 is used to engage and disengage the planting clutches 55 (55a to 55d) and the feed clutches 60 (60a to 60d)). However, the present invention is not limited to this. Alternatively, for example, the working implement 10 may be provided with plural actuators, such as electric motors or electromagnetic solenoids, and the controller 3 may control the operation of each of the actuators so that the power of each of the actuators is used to engage or disengage a corresponding one or more of the planting clutches 55 (and the feed clutches 60).

More specifically, plural actuators may be provided to be in one-to-one correspondence with the planting clutches 55 or in one-to-two correspondence with the planting clutches 55. Alternatively, plural actuators that irregularly correspond to the planting clutches 55 may be provided; for example, one planting clutch 55 may be engaged and disengaged using one actuator while another one or more planting clutches 55 are engaged and disengaged using one or more actuators. (This also applies to the feed clutches 60.) The power of the actuators may be transmitted to the corresponding clutches 55 and 60 through the cams 67a to 67d and the wires 69, 71, and 72 as illustrated in FIG. 4.

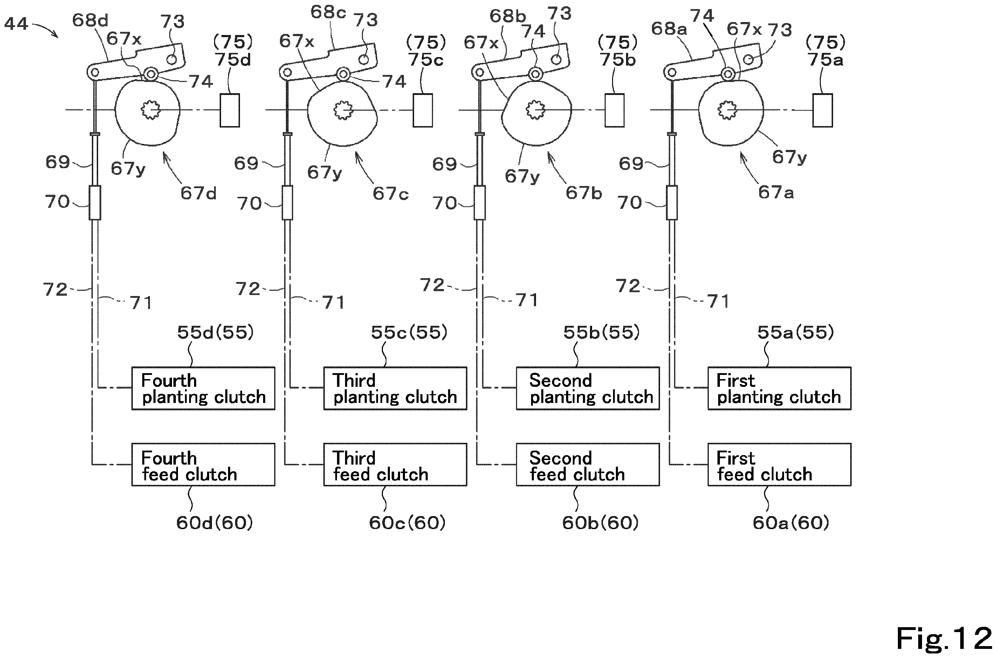

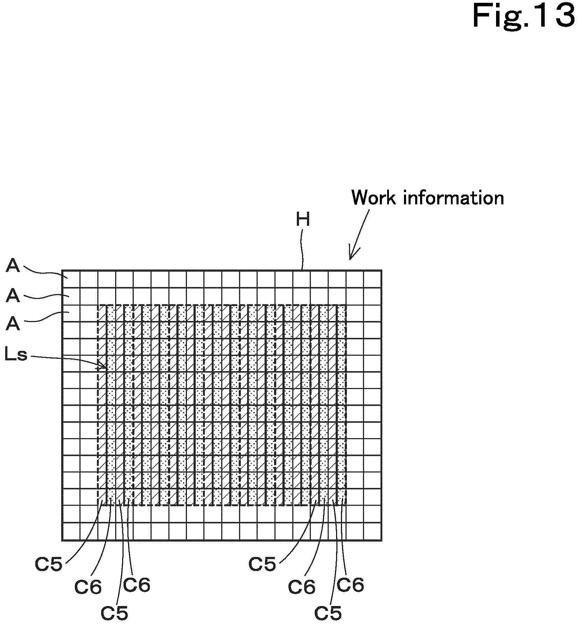

For example, as illustrated in FIG. 12, when plural (four) actuators 75 (75a to 75d) are provided to be in one-to-one correspondence with the planting clutches 55a to 55d that respectively correspond to the seedling-planting mechanisms 42a to 42d arranged in the width direction of the traveling machine body 21, the planting clutches 55a to 55d can be individually engaged and disengaged. FIG. 12 illustrates another state of cooperation between the clutch-switching mechanism 44 and the clutches 55 and 60. According to the configuration illustrated in FIG. 12, two types of seedlings that have different growth periods and cannot be planted simultaneously can be planted in the agricultural field H based on, for example, the work information illustrated in FIG. 13 so that planting lines of the two types of seedlings are alternately arranged.

Additionally, planting lines of plural types of seedlings can also be alternately arranged as illustrated in FIG. 13 when, for example, plural (two) actuators are provided to correspond to plural (two) planting clutches 55a and 55c corresponding to plural (two) odd-numbered seedling-planting mechanisms 42a and 42c counted from the left side of the traveling machine body 21 and plural (two) planting clutches 55b and 55d corresponding to plural (two) even-numbered seedling-planting mechanisms 42b and 42d counted from the left side of the traveling machine body 21.

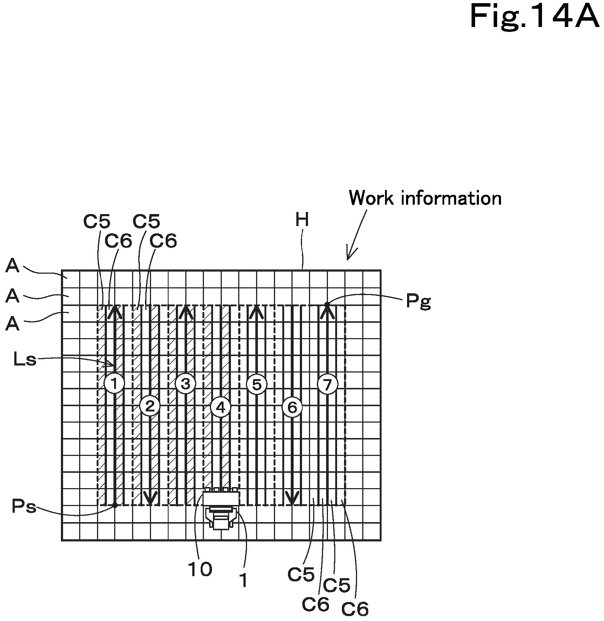

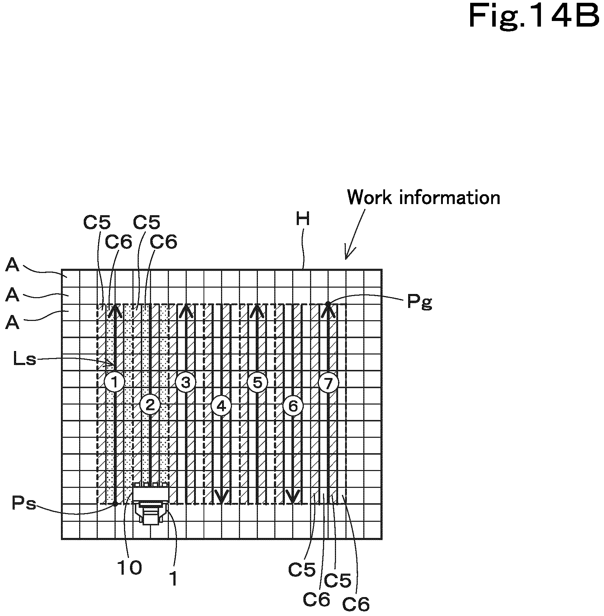

FIG. 13 illustrates another example of work information. FIG. 14A illustrates an example of planting of first seedlings in FIG. 13 and a travel route Ls. FIG. 14B illustrates an example of planting of second seedlings in FIG. 13 and the travel route Ls. The controller 3 of the agricultural machine 1 acquires the work information illustrated in FIG. 13, and then creates the travel route Ls as illustrated in FIGS. 14A and 14B. Then, first, the controller 3 plants the first seedlings in regions C5 of the agricultural field H based on the work information and the travel route Ls. In FIG. 14A (and FIG. 13), the regions planted with the first seedlings are hatched with oblique lines.

To plant the first seedlings, when the traveling machine body 21 travels along the odd-numbered travel route Ls, the controller 3 causes the actuators 75b and 75d to set the second planting clutch 55b and the fourth planting clutch 55d to the disengaged state and causes the actuators 75a and 75c to set the first planting clutch 55a and the third planting clutch 55c to the engaged state, so that the first seedling-planting mechanism 42a and the third seedling-planting mechanism 42c plant the first seedlings in the agricultural field H. Additionally, when the traveling machine body 21 travels along the even-numbered travel route Ls, the controller 3 causes the actuators 75a and 75c to set the first planting clutch 55a and the third planting clutch 55c to the disengaged state and causes the actuators 75b and 75d to set the second planting clutch 55b and the fourth planting clutch 55d to the engaged state, so that the second seedling-planting mechanism 42b and the fourth seedling-planting mechanism 42d plant the first seedlings in the agricultural field H.

After that, the controller 3 plants the second seedlings, which grow more slowly than the first seedlings, in regions C6 of the agricultural field H based on the work information and the travel route Ls. In FIG. 14B (and FIG. 13), the regions planted with the second seedlings are hatched with dots.

To plant the second seedlings, when the traveling machine body 21 travels along the odd-numbered travel route Ls, the controller 3 causes the actuators 75a and 75c to set the first planting clutch 55a and the third planting clutch 55c to the disengaged state and causes the actuators 75b and 75d to set the second planting clutch 55b and the fourth planting clutch 55d to the engaged state, so that the second seedling-planting mechanism 42b and the fourth seedling-planting mechanism 42d plant the first seedlings in the agricultural field H. Additionally, when the traveling machine body 21 travels along the even-numbered travel route Ls, the controller 3 causes the actuators 75b and 75d to set the second planting clutch 55b and the fourth planting clutch 55d to the disengaged state and causes the actuators 75a and 75c to set the first planting clutch 55a and the third planting clutch 55c to the engaged state, so that the first seedling-planting mechanism 42a and the third seedling-planting mechanism 42c plant the first seedlings in the agricultural field H.

The irregular seedling planting illustrated in FIGS. 13 to 14B may also be effectively applied to, for example, a transplanter for planting seedlings of vegetables and/or the like in a field. Additionally, as another example, the ground working mechanisms (seedling-planting mechanisms) 42 (42a to 42d) may be individually operated or stopped so that non-ground-work regions in which no seedlings are planted are formed between seedling lines formed by planting the seedlings in lines.

The number of ground working mechanisms (seedling-planting mechanisms) 42 (42a to 42d) installed in the working implement (seedling planter) 10 is not limited to the number in the above-described embodiment (four), and may be set as appropriate based on the size, horsepower, or the like of the agricultural machine (rice transplanter) 1 and the working implement 10. This also applies to the other mechanisms, planting arms, and actuators of the working implement 10.

The operating device 7 may include clutch switches for individually engaging and disengaging the planting clutches 55 and the like (and the feed clutches 76). The worker may operate the individual clutch switches while referring to the work information displayed on the display 8 so that, based on the operation of the clutch switches, the controller 3 engages and disengages the corresponding planting clutches 55 to operate or stop the corresponding seedling-planting mechanisms 42a to 42d.

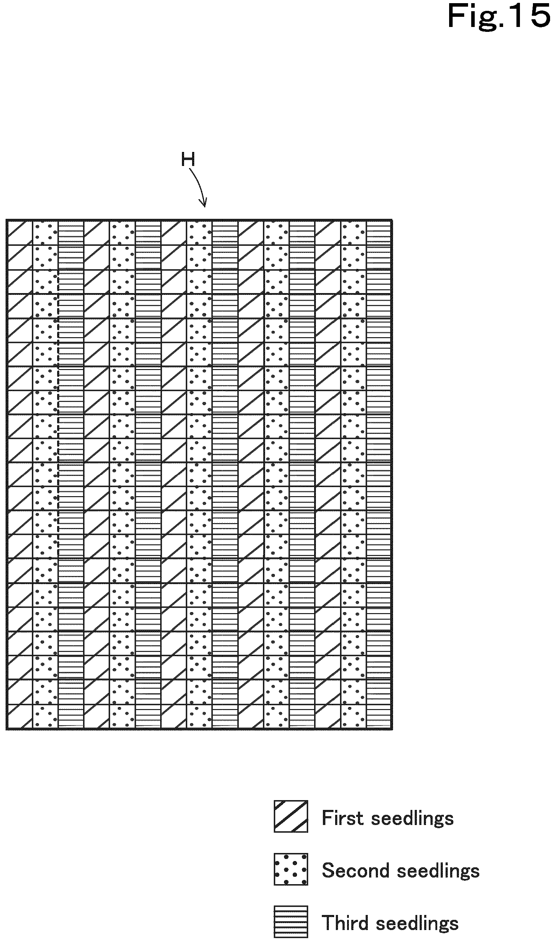

FIG. 15 illustrates another example in which the agricultural machine 1 is caused to plant materials in the agricultural field. FIG. 15 illustrates the state in which different materials (seedlings) are planted along every three lines in the agricultural field H. In this case, the agricultural machine 1 operates the ground working mechanisms (seedling-planting mechanisms) 42 to plant first seedlings along the (1+3n)^{th} (n = 0, 1, 2, ...) lines. Additionally, the agricultural machine 1 operates the ground working mechanisms (seedling-planting mechanisms) 42 to plant second seedlings different from the first seedlings along the (2+3n)^{th} (n = 0, 1, 2, ...) lines. Additionally, the agricultural machine 1 operates the ground working mechanisms (seedling-planting mechanisms) 42 to plant third seedlings different from the first seedlings and the second seedlings along the (3+3n)^{th} (n = 0, 1, 2, ...) lines. Here, each line may include one or more rows of seedlings. Alternatively, the agricultural machine 1 may plant different materials along every four or more lines in the agricultural field H.

The agricultural machine 1 and the agricultural work assistance system 100 of the present embodiment described above have the structures and effects described below.

An agricultural machine 1 according to an example embodiment includes a traveling machine body 21 and a controller 3. The traveling machine body 21 is equipped with a working implement 10 including a plurality of ground working mechanisms 42 (42a to 42d) to perform ground work. The controller 3 is configured or programmed to acquire work information indicating whether or not the ground work is to be performed in each of a plurality of areas A of an agricultural field H. The controller 3 is configured or programmed to, when the traveling machine body 21 travels in the agricultural field H and when the working implement 10 passes through an area A of the plurality of areas A, selectively activate each of the plurality of ground working mechanisms 42 (42a to 42d) based on the work information.

An agricultural work assistance system 100 according to an example embodiment includes the agricultural machine 1, and an assistor 2 to create work information indicating whether or not ground work is to be performed in each of a plurality of areas A of an agricultural field H.

An agricultural work assistance method according to an example embodiment is to perform ground work in an agricultural field H by using a working implement 10 that is equipped on a traveling machine body 21 of an agricultural machine 1 and includes a plurality of ground working mechanisms 42 (42a to 42d). The agricultural work assistance method comprises a step in which a controller 3 included in the agricultural machine 1 acquires work information, with regard to each of areas A of the agricultural field H, whether or not the ground work is to be performed in a corresponding one of the areas A, and a step in which, when the traveling machine body 21 travels in the agricultural field H and the working implement 10 passes through one of the areas A, the controller 3 selectively activates each of the plurality of ground working mechanisms 42 (42a to 42d) based on the work information.

According to the above-described structure, the ground working mechanisms 42 (42a to 42d) equipped on the agricultural machine 1 can be individually operated based on the work information. This can increase the convenience in irregular ground work in which regions that have undergone the ground work and regions that have not undergone the ground work are intentionally formed in the agricultural field H for various purposes.

In the present example embodiment, the controller 3 is configured or programmed to acquire the work information indicating whether or not each of the plurality of ground working mechanisms 42 (42a to 42d) is to perform the ground work in each of the plurality of areas A, and, when the working implement 10 passes through an area A of the plurality of areas A, if the work information indicates that at least one of the ground working mechanisms 42 (42a to 42d) is not to perform the ground work in the one of the areas, not actuate the at least one of the ground working mechanism that is indicated not to perform the ground work in the one of the areas A but activate one or more of the ground working mechanisms 42 (42a to 42d) that are to perform the ground work in the one of the areas A. Accordingly, the ground working mechanisms 42 (42a to 42d) can be automatically and individually operated or not operated in accordance with the work information, so that regions that have undergone the ground work and regions that have not undergone the ground work can be intentionally and easily formed in the agricultural field H, and the convenience can be increased.

In the present example embodiment, the controller 3 is configured or programmed to, based on the work information, select, for each of the areas A, one or more of the ground working mechanisms 42 (42a to 42d) that are to perform the ground work in a corresponding one of the areas A, and, when the working implement passes through one of the areas A, actuate the one or more of the ground working mechanisms 42 (42a to 42d) selected to perform the ground work in the one of the areas A. Accordingly, the ground working mechanisms 42 (42a to 42d) can be automatically and individually operated based on the work information, so that the convenience can be further increased when irregular ground work is performed.

In the present example embodiment, the agricultural machine 1 includes an accommodator 40a to 40h to accommodate materials that are seeds or seedlings of crops. The working implement 10 includes, as the plurality of ground working mechanisms 42 (42a to 42d), a plurality of crop-planting mechanisms 42 (42a to 42d) arranged in a width direction of the traveling machine body 21 at a predetermined interval to crop the agricultural field H with the materials accommodated in the accommodator 40a to 40h. The controller 3 is configured or programmed to determine, for each of the areas A, whether or not each of the crop-planting mechanisms 42 (42a to 42d) is to plant the materials in a corresponding one of the areas A. Accordingly, the crop-planting mechanisms 42 (42a to 42d) installed in the agricultural machine 1 can be automatically and individually operated or not operated, so that regions that have undergone the planting of the materials and regions that have not undergone the planting of the materials can be intentionally and easily formed in the agricultural field H, and the convenience can be increased.

In the present example embodiment, the agricultural machine 1 includes clutches 55 (55a to 55d) each of which is operably switched between an engaged state and a disengaged state and corresponds to each of the crop-planting mechanisms 42 (42a to 42d). Each of the crop-planting mechanisms 42 (42a to 42d) includes a planting arm 54 driven by power of a prime mover 11 provided in or on the traveling machine body 21. The planting arms 54 are each configured to, when a corresponding one of the clutches 55 (55a to 55d) is in the engaged state, take out seedlings from the accommodator 40a to 40h and plant the seedlings in the agricultural field, and, when the corresponding clutch 55 (55a to 55d) is in the disengaged state, not take out seedlings from the accommodator 40a to 40h or not plant the seedlings in the agricultural field H. The controller 3 is configured or programmed to, when one of the crop-planting mechanisms 42 (42a to 42d) is to be actuated, switch a corresponding one of the clutches 55 (55a to 55d) to the engaged state, and, when one of the crop-planting mechanisms 42 (42a to 42d) is not to be actuated, switch a corresponding one of the clutches 55 (55a to 55d) to the disengaged state.

Accordingly, the crop-planting mechanisms 42 (42a to 42d) can be automatically and individually operated or not operated by switching the corresponding clutches 55 (55a to 55d) between the engaged state and the disengaged state, so that regions planted with the seedlings and regions that are and are not planted with the seedlings can be intentionally and easily formed in the agricultural field H, and the convenience can be increased.

In the present example embodiment, the agricultural machine 1 includes a position detector (positioning device) 6 to detect a position of the traveling machine body 21 based on a satellite signal received from a satellite positioning system. The controller 3 is configured or programmed to determine, based on the position of the traveling machine body 21 detected by the position detector 6, which area of the areas A is reached by the traveling machine body 21 that is traveling, and, by referring to specific information included in the work information that indicates whether or not the ground work is to be performed in the area A reached by the traveling machine body 21, select one or more of the ground working mechanisms 42 (42a to 42d) that are to perform the ground work in the area A reached by the traveling machine body 21. Accordingly, based on the work information and the position of the traveling machine body 21 that is traveling, the ground working mechanisms 42 (42a to 42d) can be automatically and individually operated, so that regions that have undergone the ground work and regions that have not undergone the ground work can be accurately formed at intended locations in the agricultural field H, and the convenience can be increased.

In the present example embodiment, the plurality of ground working mechanisms 42 (42a to 42d) are arranged in a width direction of the traveling machine body 21. The controller 3 is configured or programmed to, based on the work information and a traveling direction of the traveling machine body 21, select, for each of the areas A, one or more of the ground working mechanisms 42 (42a to 42d) that are to perform the ground work in a corresponding one of the areas A. Accordingly, appropriate one or more ground working mechanisms of the ground working mechanisms 42 (42a to 42d) can be operated at intended locations in the agricultural field H to perform the ground work at the intended locations.

In the present example embodiment, the controller 3 is configured or programmed to create, based on the work information and a working width W1 of the working implement 10, a travel route Ls along which the traveling machine body 21 is to travel with the working implement 10 performing the ground work in the agricultural field H, based on the work information and the travel route Ls, select, for each of the areas A, one or more of the ground working mechanisms 42 (42a to 42d) that are to perform the ground work in a corresponding one of the areas A, and, during travel of the traveling machine body 21 along the travel route Ls, when the working implement 10 passes through one of the areas A, actuate the one or more ground working mechanisms 42 (42a to 42d) selected to perform the ground work in the one of the areas A. Accordingly, the agricultural machine 1 can be automatically driven in the agricultural field H to automatically and individually operate the ground working mechanisms 42 (42a to 42d), so that the ground work can be performed at intended locations, and the convenience can be further increased.

In the example embodiment, the agricultural machine 1 includes a traveling machine body 21 equipped with a working implement 10 including a plurality of crop-planting mechanisms 42 (42a to 42d) to crop the agricultural field H with materials. An assistor 2 is configured or programmed to create, for each variety of the materials, the work information indicating, with regard to each of the areas A, whether or not the plurality of crop-planting mechanisms 42 (42a to 42d) are to plant the variety of materials in a corresponding one of the areas A. Accordingly, the convenience can be increased when the ground working mechanisms 42 (42a to 42d) equipped on the agricultural machine 1 are individually operatedbased on plural pieces of work information to irregularly plant different varieties of materials at intended locations in the agricultural field H.

Although the present invention has been described, it is to be understood that the embodiment disclosed herein is illustrative in all respects and not restrictive. The scope of the present invention is defined not by the above description but by the claims, and is intendedto include all alterations within the meaning and scope equivalent to the claims.

### Reference Signs List

1 agricultural machine, rice transplanter
2 assistor
3 controller
6 positioning device (position detector)
9 prime mover
10 working implement, seedling planter
21 traveling machine body
40a to 40h placement unit (accommodator)
42, 42a to 42d seedling-planting mechanism (ground working mechanism)
54 planting arm
55, 55a to 55d planting clutch (clutch)
100 agricultural work assistance system
A area
H agricultural field
Ls travel route
W1 working width

## Claims

1. An agricultural machine comprising:
a traveling machine body equipped with a working implement including a plurality of ground working mechanisms to perform ground work; and
a controller configured or programmed to:
acquire work information indicating, with regard to each of areas of an agricultural field, whether or not the ground work is to be performed in a corresponding one of the areas; and
when the traveling machine body travels in the agricultural field and the working implement passes through one of the areas, selectively actuate each of the ground working mechanisms based on the work information.

2. The agricultural machine according to claim 1, wherein
the controller is configured or programmed to:
acquire the work information, with regard to each of the areas, indicating whether each of the ground working mechanisms is to perform the ground work in a corresponding one of the areas; and
when the working implement passes through one of the areas, if the work information indicates that at least one of the ground working mechanisms is not to perform the ground work in the one of the areas, not actuate the at least one of the ground working mechanisms that is indicated not to perform the ground work in the one of the areas but actuate one or more of the ground working mechanisms that are indicated to perform the ground work in the one of the areas.

3. The agricultural machine according to claim 1, wherein
the controller is configured or programmed to:
based on the work information, select, for each of the areas, one or more of the ground working mechanisms that are to perform the ground work in a corresponding one of the areas; and
when the working implement passes through one of the areas, actuate the one or more of the ground working mechanisms selected to perform the ground work in the one of the areas.

4. The agricultural machine according to claim 3, comprising:
an accommodator to accommodate materials that are seeds or seedlings of crops, wherein
the working implement includes, as the plurality of ground working mechanisms, a plurality of crop-planting mechanisms arranged in a width direction of the traveling machine body at a predetermined interval to crop the agricultural field with the materials accommodated in the accommodator, and
the controller is configured or programmed to determine, for each of the areas, whether or not each of the crop-planting mechanisms is to plant the materials in a corresponding one of the areas.

5. The agricultural machine according to claim 4, comprising:
clutches each of which is operably switched between an engaged state and a disengaged state and corresponds to each of the crop-planting mechanisms, wherein
each of the crop-planting mechanisms includes a planting arm driven by power of a prime mover provided in or on the traveling machine body,
the planting arms are each configured to:
when a corresponding one of the clutches is in the engaged state, take out seedlings from the accommodator and plant the seedlings in the agricultural field; and
when the corresponding clutch is in the disengaged state, not take out seedlings from the accommodator or not plant the seedlings in the agricultural field, and
the controller is configured or programmed to:
when one of the crop-planting mechanisms is to be actuated, switch a corresponding one of the clutches to the engaged state; and
when one of the crop-planting mechanisms is not to be actuated, switch a corresponding one of the clutches to the disengaged state.

6. The agricultural machine according to claim 3, comprising:
a position detector to detect a position of the traveling machine body based on a satellite signal received from a satellite positioning system, wherein
the controller is configured or programmed to:
determine, based on the position of the traveling machine body detected by the position detector, which area of the areas is reached by the traveling machine body that is traveling; and
by referring to specific information included in the work information that indicates whether or not the ground work is to be performed in the area reached by the traveling machine body, select one or more of the ground working mechanisms that are to perform the ground work in the area reached by the traveling machine body.

7. The agricultural machine according to claim 3, wherein
the plurality of ground working mechanisms are arranged in a width direction of the traveling machine body, and
the controller is configured or programmed to, based on the work information and a traveling direction of the traveling machine body, select, for each of the areas, one or more of the ground working mechanisms that are to perform the ground work in a corresponding one of the areas.

8. The agricultural machine according to claim 3, wherein
the controller is configured or programmed to:
create, based on the work information and a working width of the working implement, a travel route along which the traveling machine body is to travel with the working implement performing the ground work in the agricultural field;
based on the work information and the travel route, select, for each of the areas, one or more of the ground working mechanisms that are to perform the ground work in a corresponding one of the areas; and
during travel of the traveling machine body along the travel route, when the working implement passes through one of the areas, actuate the one or more ground working mechanisms selected to perform the ground work in the one of the areas.

9. An agricultural work assistance system comprising:
the agricultural machine according to any one of claims 1 to 8; and
an assistor to create work information indicating, with regard to each of areas of an agricultural field, whether or not ground work is to be performed in a corresponding one of the areas.

10. The agricultural work assistance system according to claim 9, wherein
the agricultural machine includes a traveling machine body equipped with a working implement including a plurality of crop-planting mechanisms to crop the agricultural field with materials, and
the assistor is configured or programmed to create, for each variety of the materials, the work information indicating, with regard to each of the areas, whether or not the plurality of crop-planting mechanisms are to plant the variety of materials in a corresponding one of the areas.

11. An agricultural work assistance method to perform ground work in an agricultural field by using a working implement that is equipped on a traveling machine body of an agricultural machine and includes a plurality of ground working mechanisms, the agricultural work assistance method comprising:
a step in which a controller included in the agricultural machine acquires work information indicating, with regard to each of areas of the agricultural field, whether or not the ground work is to be performed in a corresponding one of the areas; and
a step in which, when the traveling machine body travels in the agricultural field and the working implement passes through one of the areas, the controller selectively activates each of the ground working mechanisms based on the work information.
